(19) Europäisches Patentamt / European Patent Office / Office européen des brevets

(11) **EP 3 954 215 A1**

(12) **EUROPEAN PATENT APPLICATION**
published in accordance with Art. 153(4) EPC

(43) Date of publication:
**16.02.2022 Bulletin 2022/07**

(21) Application number: **20782098.6**

(22) Date of filing: **30.03.2020**

(51) International Patent Classification (IPC):
**A01P 3/00** (2006.01)       **A01N 43/80** (2006.01)

(52) Cooperative Patent Classification (CPC):
**A01N 43/80**

(86) International application number:
**PCT/JP2020/014533**

(87) International publication number:
**WO 2020/203963 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2019   JP 2019072794**

(71) Applicant: **Mitsui Chemicals Agro, Inc.
Tokyo 103-0027 (JP)**

(72) Inventors:
• **KITANO Tomoyuki
Yasu-shi, Shiga 520-2362 (JP)**

• **KOISHIHARA Hikaru
Mobara-shi, Chiba 297-0017 (JP)**
• **OHARA Toshiaki
Yasu-shi, Shiga 520-2362 (JP)**
• **YAMAMOTO Tetsuya
Tokyo 103-0027 (JP)**
• **KIKKAWA Maya
Yasu-shi, Shiga 520-2362 (JP)**
• **SUGIE Yoshiko
Yasu-shi, Shiga 520-2362 (JP)**

(74) Representative: **Mewburn Ellis LLP
Aurora Building
Counterslip
Bristol BS1 6BX (GB)**

(54) **AGROCHEMICAL COMPOSITION WITH STRENGTHENED EFFICACY**

(57)     An agrochemical composition of the present invention includes (A) hydroxyisoxazole or a salt thereof, and (B) at least one auxiliary agent selected from the following (b1) to (b4).
(b1) at least one nonionic surfactant selected from the group consisting of a sugar ester type nonionic surfactant, an alkylamine type nonionic surfactant, an alkylphenol type nonionic surfactant, and an ether type nonionic surfactant
(b2) a carboxylic acid type anionic surfactant
(b3) a potassium salt (provided that, excluding a potassium salt of hydroxyisoxazole.)
(b4) at least one solvent selected from the group consisting of an amide-based solvent and a lactate-based solvent

EP 3 954 215 A1

**Description**

TECHNICAL FIELD

The present invention relates to an agrochemical composition containing hydroxyisoxazole or a salt thereof as an active ingredient.

BACKGROUND ART

In agricultural production, weed and pest control with agrochemicals such as a herbicide, a pesticide, and a fungicide is indispensable for stable agricultural production, labor saving in agricultural work, and quality improvement of agricultural products. In addition, formulation using various surfactants, solvents, and the like, mixed use of spreading agents in the garden, and the like have been attempted for the purpose of sprayability, transferability, spreadability, stabilization, rain resistance, efficacy enhancement, and the like of agrochemical compositions (Non-Patent Documents 1 and 2). On the other hand, a powder, a liquid, and a wettable powder are commercially available as a formulation containing hydroxyisoxazole or a salt thereof.

Soil-borne diseases of various crops caused by soil-borne pathogens have long been a major problem in crop cultivation and agricultural management due to the magnitude of the agricultural damage and the difficulty of controlling such crop diseases. In recent years, in order to rationalize cultivation and distribution, there are increasing numbers of intensive cultivation cases of various crops equipped with highly durable facilities or equipment, and continuous cultivation cases of a single crop on the same soil due to specialization of cultivation of various crops. Under such circumstances, soil-borne diseases frequently occur in facility cultivation and open-field cultivation, causing great damage to crop cultivation and often resulting in no crop harvest. Pythium, Aphanomyces, Fusarium, and Rhizoctonia are known as typical soil-borne pathogens that cause such soil-borne infectious diseases.

Hydroxyisoxazole or a salt thereof is widely and generally used as a drug that widely controls soil-borne diseases caused by such various soil-borne pathogens and is highly environmentally safe. For example, hydroxyisoxazole or a salt thereof is widely used for the purpose of controlling seedling damping-off of rice and various crops (due to Pythium spp., Fusarium spp., or the like), seedling damping-off of sugar beet (due to Aphanomyces spp. or the like), and diseases caused by Fusarium in various crops. In addition, these diseases can be controlled by treating the seeds with hydroxyisoxazole or a salt thereof as well as by directly treating the soil with hydroxyisoxazole or a salt thereof.

In addition, n-octyltrimethylammonium bromide, sodium dodecyl sulfate, or sodium dialkylsulfosuccinate has been reported as an auxiliary ingredient for enhancing the efficacy of hydroxyisoxazole or a salt thereof (Patent Document 1).

RELATED DOCUMENT

PATENT DOCUMENT

[Patent Document 1] Japanese Unexamined Patent Publication No. 2004-43325

NON-PATENT DOCUMENT

[Non-Patent Document 1] Journal of Oleo Science (2002) Vol. 2, No.4, pp. 205 to 210.
[Non-Patent Document 2] Japanese Journal of Pesticide Science (1982) Vol. 7, pp. 203 to 210

SUMMARY OF THE INVENTION

TECHNICAL PROBLEM

Patent Document 1 describes that a cationic surfactant, a sulfonic acid-based anionic surfactant, and an amine hydrochloride are used as an auxiliary ingredient for enhancing the efficacy of hydroxyisoxazole or a salt thereof. However, the effect of using such an auxiliary ingredient is not sufficient, and the combination of two or more auxiliary agents is not described.

An obj ect of the present invention is to find a novel agrochemical composition which is superior in efficacy enhancing effect with respect to the plant disease control effect caused by the biological activity of hydroxyisoxazole or a salt thereof to commercially available and existing compositions. The present invention has been made under the above technical background, and an object of the present invention is to provide an agrochemical composition that enhances a plant disease control effect of hydroxyisoxazole or a salt thereof, and a method for controlling a plant disease using the agrochemical composition.

SOLUTION TO PROBLEM

As a result of extensive studies, the present inventors have surprisingly found that, in a case where (B) an auxiliary agent including (b1) a nonionic surfactant selected from the group consisting of a sugar ester type nonionic surfactant, an alkylamine type nonionic surfactant, an alkylphenol type nonionic surfactant, and an ether type nonionic surfactant, (b2) a carboxylic acid type anionic surfactant, (b3) a potassium salt, or (b4) at least one or more solvents selected from the group consisting of an amide-based solvent and a lactate-based solvent is blended in a composition containing (A) hydroxyisoxazole or a salt thereof as an active ingredient, the plant disease control effect of the hydroxyisoxazole or the salt thereof, which is an active ingredient, is enhanced. The present invention has been completed based on these findings.

That is, the present invention can be shown below.

[1] An agrochemical composition including:

(A) hydroxyisoxazole or a salt thereof; and
(B) at least one auxiliary agent selected from the following (b1) to (b4).
(b1) at least one nonionic surfactant selected from the group consisting of a sugar ester type nonionic surfactant, an alkylamine type nonionic surfactant, an alkylphenol type nonionic surfactant, and an ether type nonionic surfactant.
(b2) a carboxylic acid type anionic surfactant.
(b3) a potassium salt (provided that, excluding a potassium salt of hydroxyisoxazole).
(b4) at least one solvent selected from the group consisting of an amide-based solvent and a lactate-based solvent.

[2] The agrochemical composition according to [1], in which (b1) the nonionic surfactant is at least one selected from a POE sorbitan fatty acid ester, an alkoxylated aliphatic amine, a POE alkyl phenyl ether, and a POE alkyl ether.
[3] The agrochemical composition according to [1] or [2], in which (b2) the carboxylic acid type anionic surfactant is at least one selected from a polycarboxylate and a sodium salt of a polycarboxylic acid copolymer.
[4] The agrochemical composition according to any one of [1] to [3], in which (b3) the potassium salt is at least one selected from potassium chloride, potassium carbonate, potassium nitrate, and potassium benzoate.
[5] The agrochemical composition according to any one of [1] to [4], in which (b4) the solvent is at least one selected from methyl-5-dimethylamino-2-methyl-5-oxopentanoate methyl, methyl lactate, ethyl lactate, and propyl lactate.
[6] The agrochemical composition according to any one of [1] to [5], in which (B) the auxiliary agent includes two or more selected from the (b1) to the (b4).
[7] The agrochemical composition according to any one of [1] to [6], further including at least one compound selected from the group consisting of picarbutrazox, cyazofamid and amisulbrom, or a salt thereof.
[8] A control agent for a plant disease, including the agrochemical composition according to any one of [1] to [6].
[9] The control agent according to [8], in which the plant disease is a disease caused by any of Aphanomyces spp., Pythium spp., Fusarium spp., Rhizoctonia spp., Screlotium spp., Cochiliobolus spp., Collletotrichum spp., Magnaporthe spp., Rosellinia spp., and Sclerotinia spp..
[10] A control agent for a plant disease, including the agrochemical composition according to [7].
[11] The control agent according to [10], in which the plant disease is a disease caused by any of Aphanomyces spp., Pythium spp., Fusarium spp., Rhizoctonia spp., Screlotium spp., Cochiliobolus spp., Collletotrichum spp., Magnaporthe spp., Rosellinia spp., Sclerotinia spp., Rhizopus spp., Phytophthora spp., Albugo spp., Bremia spp., Peronospora spp., Pseudoperonospora spp., Plasmopara spp., Sclerospora spp., Plasmodiophora spp., and Spongospora spp..
[12] A method for controlling a plant disease, including applying the agrochemical composition according to any one of [1] to [7] to cultivation soil or a plant.
[13] The method for controlling a plant disease according to [12], in which the application to a plant is by contact of the agrochemical composition according to any one of [1] to [7] with a plant body or a plant seed; or by inclusion of the agrochemical composition according to any one of [1] to [7] in cultivation soil related to cropping of the plant; or by contact of the agrochemical composition according to any one of [1] to [7] with a root or rhizome of the plant.
[14] A method for enhancing a control effect, including applying (A) hydroxyisoxazole or a salt thereof and (B) at least one auxiliary agent selected from the following (b1) to (b4) to a plant body.

(b1) at least one nonionic surfactant selected from the group consisting of a sugar ester type nonionic surfactant, an alkylamine type nonionic surfactant, an alkylphenol type nonionic surfactant, and an ether type nonionic surfactant.
(b2) a carboxylic acid type anionic surfactant.
(b3) a potassium salt (provided that, excluding a potassium salt of hydroxyisoxazole).
(b4) at least one solvent selected from the group consisting of an amide-based solvent and a lactate-based solvent.

[15] A herbicide safener including the agrochemical composition according to any one of [1] to [7].
[16] A method for reducing herbicide phytotoxicity, including applying the agrochemical composition according to any one of [1] to [7] to cultivation soil or a plant.
[17] The method for reducing herbicide phytotoxicity according to [16], in which the application to a plant is by contact of the agrochemical composition according to any one of [1] to [7] with the plant seed; or by inclusion of the agrochemical composition according to any one of [1] to [7] in cultivation soil related to cropping of the plant; or by contact of the agrochemical composition according to any one of [1] to [7] with a root or rhizome of the plant.

ADVANTAGEOUS EFFECTS OF INVENTION

The composition of the present invention is based on the finding of an agrochemical composition in which (B) an auxiliary agent including (b1) a nonionic surfactant selected from the group consisting of a sugar ester type nonionic surfactant, an alkylamine type nonionic surfactant, an alkylphenol type nonionic surfactant, and an ether type nonionic surfactant, (b2) a carboxylic acid type anionic surfactant, (b3) a potassium salt, or (b4) at least one or more solvents selected from the group consisting of an amide-based solvent and a lactate-based solvent is blended in an active ingredient which is (A) hydroxyisoxazole or a salt thereof. That is, according to the present invention, the plant disease control effect is enhanced as compared with a known composition containing hydroxyisoxazole or a salt thereof as an active ingredient.

DESCRIPTION OF EMBODIMENTS

Next, various terms used in the present specification will be described.
The "salt of hydroxyisoxazole" refers to a metal salt, an acid addition salt, or the like of the compound, and examples thereof include a salt of an alkali metal such as lithium, sodium, or potassium; a salt of an alkaline earth metal such as calcium, barium, or magnesium; a salt of aluminum or a salt of a transition metal such as manganese, copper, zinc, or iron; a salt of a hydrohalic acid such as hydrofluoric acid, hydrochloric acid, hydrobromic acid, or hydroiodic acid; a salt of an inorganic acid such as nitric acid, sulfuric acid, phosphoric acid, chloric acid, or perchloric acid; a salt of a sulfonic acid such as methanesulfonic acid, ethanesulfonic acid, trifluoromethanesulfonic acid, benzenesulfonic acid, or p-toluenesulfonic acid; a salt of a carboxylic acid such as formic acid, acetic acid, propionic acid, trifluoroacetic acid, fumaric acid, tartaric acid, oxalic acid, maleic acid, malic acid, succinic acid, benzoic acid, mandelic acid, ascorbic acid, lactic acid, gluconic acid, or citric acid; and a salt of an amino acid such as glutamic acid or aspartic acid.
The "nonionic surfactant" refers to a surfactant having a hydrophilic group that does not ionize in a case of being dissolved in water, and examples thereof include a sugar ester type surfactant, a fatty acid ester type surfactant, an ether type surfactant, an alkylphenol type surfactant, a polyoxyethylene-polyoxypropylene block polymer type surfactant, an alkylamine type surfactant, a bisphenol type surfactant, a polyaromatic ring type surfactant, a silicone-based surfactant, and a fluorine-based surfactant.
The "sugar ester type" refers to a surfactant having a structure in which a fatty acid is ester-bonded with a polyhydric alcohol such as glycerin, sorbitol, or sucrose, which is a part of a nonionic surfactant, and examples thereof include a POE sorbitan fatty acid ester. The "alkylamine type" refers to a surfactant having a structure in which an ethylene oxide is added to a higher aliphatic amine which is a part of a nonionic surfactant, and examples thereof include an alkoxylated aliphatic amine. The "alkylphenol type" refers to a surfactant having a structure in which an ethylene oxide is added to an alkylphenol group, and examples thereof include a POE alkyl phenyl ether. The "ether type" refers to a surfactant having a structure in which an ethylene oxide is added to an alcohol group, and examples thereof include a POE alkyl ether.
The "anionic surfactant" refers to a surfactant having a hydrophobic group that dissociates into anions in a case of being dissolved in water, and examples thereof include a carboxylic acid type surfactant, a sulfonic acid type surfactant, a sulfate type surfactant, and a phosphate type surfactant.
The "carboxylic acid type" refers to a part of a surfactant having a carboxylate that is a part of an anionic surfactant as a hydrophilic group, and examples thereof include a polycarboxylate and a sodium salt of a polycarboxylic acid copolymer.

The "potassium salt" refers to a potassium salt and examples thereof include potassium chloride, potassium carbonate, potassium nitrate, and potassium benzoate.

The "amide-based solvent" and the "lactate-based solvent" refer to a part of an organic compound having a property of dissolving other substances, and suitable examples thereof include methyl-5-dimethylamino-2-methyl-5-oxopentanoate methyl, methyl lactate, ethyl lactate, and propyl lactate.

The "plant body" as used in the present invention refers to a crop in which a person protects and manages reproduction and growth. Crops are classified by comprehensively determining their cultivation method, commercial value, purpose of use, part of use, botanical classification, and the like. Generally, crops are roughly divided into agricultural crops and horticultural crops. Agricultural crops are divided into food crops, industrial crops, forage crops, and green manure crops according to the purpose of use. Specific examples of crops include, but are not limited to, rice, wheat, barley, potato, corn, grape, apple, pear, peach, nectarine, Japanese apricot, apricot, cherry, persimmon, Chinese quince, marmelo, chestnut, kiwi fruit, blueberry, Japanese medlar, banana, citrus fruit, fig, olive, papaya, akebi, oil palm, soybean, peanut, kidney bean, pea, podded pea, fava bean, adzuki bean, strawberry, cabbage, daikon radish, mizuna (Brassica rapa var. laciniifolia), mibuna (Brassica rapa var. laciniifolia subvar. oblanceolata), turnip, komatsuna (Brassica rapa var. perviridis), napa cabbage, broccoli, cauliflower, nabana (Brassica napus L.), lettuce, tomato, eggplant, bell pepper, hot pepper, wax gourd, green onion, onion, small green onion, cucumber, balsam pear, melon, watermelon, pumpkin, zucchini, carrot, Japanese ginger, ginger, burdock, udo, Japanese angelica tree, spinach, sugar beet, asparagus, okra, Japanese parsely, safflower, rapeseed, Japanese honewort, sweet potato, taro, glutinous yam, konjak, sugar cane, tobacco, tea plant, coffee tree, sunflower, tulip, carnation, basil, iris, aster, rose, chrysanthemum, cotton, pop, autumn bellflower, lily, peony, Chinese peony, cyclamen, Chinese scallion, pepper, garlic, butterbur, beefsteak plant, cinnamon, Japanese horse-radish, Japanese angelica tree, lotus root, sorghum, western turf (bentgrass, bermudagrass, bluegrass, ryegrass), Japanese turf, orchardgrass, Italian ryegrass, alfalfa, red clover, Japanese valerian, mulberry tree, cockscomb, ground cherry, calendula, safflower, azaleas, Japanese flowering cherry, oak, flowering quince, poplar, Japanese holly, fragrant daphne, trees, and timbers (saplings). In addition, the "plant body" as used in the present invention collectively refers to all the parts constituting an individual plant, and examples thereof include a stem, a leaf, a root, a seed, a flower, and a fruit.

The "plant seed" as used in the present invention refers to a small body that stores nutrients for germination of an embryo plant and is used for agricultural reproduction. Specific examples of the plant seed include seeds of corn, soybean, cotton, rice, sugar beet, wheat, barley, sunflower, tomato, cucumber, eggplant, spinach, podded pea, pumpkin, sugar cane, tobacco, bell pepper, rapeseed, and the like; seed potatoes of taro, potato, sweet potato, ginger, konjak, and the like; bulbs of garlic, edible lily, tulip, and the like; seed bulbs of Chinese scallion, and the like; and treated seeds with film coating, pellet granulation, color pellet granulation and germination improvement treatment (priming treatment). Further examples of the plant seed include, but are not limited to, seeds of genetically modified crops that are plants produced by artificially manipulating genes or the like and do not originally exist in nature, such as a seed of soybean, corn, cotton, or the like with herbicide resistance; a seed of rice, tobacco, or the like adapted to a cold region; a seed of corn, cotton, or the like with pesticidal substance-producing ability; a tuber of potato with pesticidal substance-producing ability; and a seed of a plant whose gene has been modified by genome editing.

The "cultivation soil" as used in the present invention refers to soil for growing and cultivating a plant body and a plant seed. Specifically, the cultivation soil refers to soil in which crops can be cultivated, and contains an organic substance, a soil improvement material, a microbial material, an agrochemical composition, and a fertilizer. In addition, special soil (artificial bed soil) in which the soil particle size is processed for raising of seedlings is also included in the cultivation soil. Examples of the special soil include bed soil for raising of paddy rice seedlings and bed soil for raising of vegetable seedlings.

The "plant disease" as used in the present invention refers to a phenomenon in which a pathogen causes a systemic abnormal pathological symptom such as wilting, dieback, yellowing, curling, or spindly growth or a partial pathological symptom such as spot, leaf blight, mosaic, leaf roll, branch blight, root rot, root hump, or hump, in a plant such as an agricultural crop, a flower, a flowering tree, or a tree, that is, a phenomenon in which the plant becomes sick. The pathogens that cause plant diseases mainly include fungi, bacteria, spiroplasma, phytoplasma, viruses, viroids, parasitic higher plants, and nematodes, and plant diseases preferably include, but are not limited to, fungal and bacterial plant diseases.

The "control agent" for a "plant disease" as used in the present invention refers to an agent capable of controlling a disease caused by a pathogen. It is possible to control a plant disease by spraying foliage of plants, treating seeds, or treating soil with a control agent. The control agent for a plant disease of the present invention includes an agrochemical composition of the present invention in which a plant disease control effect is enhanced.

Next, the agrochemical composition of the present invention in which a plant disease control effect is enhanced will be described.

The agrochemical composition of the present invention contains (A) hydroxyisoxazole or a salt thereof as an active ingredient and (B) an auxiliary agent. Further, at least one compound selected from the group consisting of picarbutrazox, cyazofamid and amisulbrom, or a salt thereof can be contained as the active ingredient.

The agrochemical composition of the present invention can contain, as (B) the auxiliary agent, at least one selected from (b1) a nonionic surfactant, (b2) a carboxylic acid type anionic surfactant, which is an anionic surfactant, (b3) a potassium salt (provided that, excluding a potassium salt of hydroxyisoxazole), and (b4) a solvent, and preferably contains two or more thereof.

Examples of (b1) the nonionic surfactant that can be used in the composition of the present invention include a sugar ester type nonionic surfactant, an alkylamine type nonionic surfactant, an alkylphenol type nonionic surfactant, and an ether type nonionic surfactant. At least one selected from these surfactants can be used. Preferred examples of (b1) the nonionic surfactant include a POE sorbitan fatty acid ester, an alkoxylated aliphatic amine, a POE alkyl phenyl ether, and a POE alkyl ether.

Specific product examples of (b1) the nonionic surfactant include NEWKALGEN D-941, NEWKALGEN D-945A, NEWKALGEN D-945E, NEWKALGEN D-945T, and NEWKALGEN D-3020 (all manufactured by Takemoto Oil & Fat Co., Ltd.), Witcamine 4130A, ADSEE AB600, ADSEE AB615, and ADSEE AB650 (all manufactured by Akzo Nobel N.V.), SOLPOL T-10, SOLPOL T-15, SOLPOL T-20, SOLPOL T-26, and PHOSPHANOL RA-600 (all manufactured by Toho Chemical Industry Co., Ltd.), NEWCOL TA-420, NEWCOL 2320, NEWCOL 2306Y, NEWCOL NT-12, and NEWCOL 714 (all manufactured by Nippon Nyukazai Co., Ltd.), RHEODOL TW-0320V, EMULGEN 108, and EMANON 1112 (all manufactured by Kao Corporation), NOIGEN EA-87, NOIGEN EA-137, NOIGEN EA-157, NOIGEN EA-177, NOIGEN EA-207D, NOIGEN TDS-70, NOIGEN SD-80, NOIGEN ET-165, DIANOL CDE, DKS NL-50, and DKS NL-70 (all manufactured by DKS Co., Ltd.), ALKAMULS T80 and SOPROPHOR BSU (both manufactured by Solvay S.A.), NIKKOL BL-2 and NIKKOL BL-42 (both manufactured by Nikko Chemicals Co., Ltd.), and TANEMUL PS16 (manufactured by TANATEX Chemicals B.V.).

Preferred examples of (b2) the carboxylic acid type anionic surfactant that can be used in the composition of the present invention include a polycarboxylate and a sodium salt of a polycarboxylic acid copolymer. At least one selected from these compounds can be used.

Specific product examples of (b2) the carboxylic acid type anionic surfactant include SOLPOL 7248S (manufactured by Toho Chemical Industry Co., Ltd.), LOVISGEN GD-54R, LOVISGEN GD-65R, and LOVISGEN F-200 (all manufactured by Senka Corporation), and NEWKALGEN WG-5, NEWKALGEN TG-90, and AGROSURF WG-5200 (all manufactured by Takemoto Oil & Fat Co., Ltd.).

Preferred examples of (b3) the potassium salt, which is a salt that can be used in the composition of the present invention, include potassium chloride, potassium carbonate, potassium nitrate, potassium benzoate, potassium sorbate, potassium pyrosulfite, potassium acetate, potassium dihydrogen phosphate, potassium tertiary phosphate, potassium hydrogen phthalate, potassium hexametaphosphate, tripotassium citrate, potassium lactate, potassium carbonate, and potassium acetate. At least one selected from these compounds can be used.

Specific product examples of (b3) the potassium salt include potassium chloride, potassium carbonate, potassium nitrate, and potassium benzoate (all manufactured by FUJIFILM Wako Pure Chemical Corporation).

Examples of (b4) the solvent that can be used in the composition of the present invention include an amide-based solvent and a lactate-based solvent, and preferably include methyl-5-dimethylamino-2-methyl-5-oxopentanoate methyl, methyl lactate, ethyl lactate, and propyl lactate. At least one selected from these compounds can be used as (b4) the solvent.

Specific product examples of (b4) the solvent include RHODIASOLV POLARCLEAN (manufactured by Solvay Nicca, Ltd.), and PURASOLV EHL, PURASOLV ML, PURASOLV EL, and PURASOLV NPL (all manufactured by Corbion N.V.).

The blending amount of the hydroxyisoxazole according to the present invention is usually 0.1% to 50% by weight and suitably 20% to 50% by weight with respect to 100% by weight of the agrochemical composition.

The blending percentage of (b1) the nonionic surfactant used in the present invention is suitably 0.1% to 10% by weight and more suitably 1% to 5% by weight with respect to 100% by weight of the agrochemical composition.

The blending percentage of (b2) the carboxylic acid type anionic surfactant used in the present invention is suitably 0.1% to 10% by weight and more suitably 1% to 5% by weight with respect to 100% by weight of the agrochemical composition.

The blending percentage of (b3) the potassium salt used in the present invention is suitably 0.1% to 10% by weight and more suitably 1% to 5% by weight with respect to 100% by weight of the agrochemical composition.

The blending percentage of (b4) the solvent used in the present invention is suitably 0.1% to 10% by weight and more suitably 1% to 5% by weight with respect to 100% by weight of the agrochemical composition.

The composition of the present invention can be formulated into a desired dosage form by blending the above-mentioned ingredients in the above-mentioned percentages. Specifically, the formulation may be any dosage form of a solid formulation such as a powder, a wettable powder, a granular wettable powder, a water-soluble powder, a granular water-soluble powder, or a granule; and a liquid formulation such as an emulsion, a liquid, a microemulsion, an aqueous suspension, an aqueous emulsion, or a suspo-emulsion, and the composition of the present invention can be formulated into a wide range of formulation types. In addition, even in a case where it is a dosage form other than the specific dosage form exemplified here, the composition of the present invention can be made into any formulation which is directly brought into contact with a plant body or seed or is diluted and then brought into contact with a plant body or seed or is contained in the cultivation soil.

In addition to (A) hydroxyisoxazole or a salt thereof, which is an agrochemical fungicidal ingredient, and (B) an auxiliary agent, which is an auxiliary ingredient for enhancing the efficacy, auxiliary ingredients such as a surfactant, a binder, a thickener, a defoamer, a mildew-proofing agent, a solvent, a colorant, a bulking agent, a preservative, an antifreezing agent, a stabilizer and/or a pH adjuster, which are commonly blended in agricultural formulations, can be added to the composition of the present invention, if necessary. These auxiliary ingredients may be selected according to the type of agrochemical active ingredient used.

Examples of other nonionic surfactants that can be further used in the composition of the present invention include a fatty acid ester type surfactant, a polyoxyethylene-polyoxypropylene block polymer type surfactant, a bisphenol type surfactant, a polyaromatic ring type surfactant, a silicone-based surfactant, an acetylene glycol-based surfactant, and a fluorine-based surfactant.

Examples of the anionic surfactant that can be further used in the composition of the present invention include a sulfate type surfactant, a sulfonate type surfactant, and a phosphate type surfactant.

Examples of the cationic surfactant that can be further used in the composition of the present invention include an ammonium type surfactant and a benzalkonium type surfactant.

Examples of the zwitterionic surfactant that can be further used in the composition of the present invention include a betaine type surfactant, a glycine type surfactant, and an amino acid type amphoteric surfactant.

The binder that can be used in the composition of the present invention is not particularly limited as long as it is commonly used in agrochemical formulations, and examples thereof include dextrin, starch, soluble starch, $\alpha$-starch, sodium alginate, gum arabic, gum tragacanth, gelatin, casein, sodium carboxymethyl cellulose, methyl cellulose, ethyl cellulose, hydroxyethyl cellulose, hydroxypropyl cellulose, polyvinyl alcohol, polyacrylamide, sodium polyacrylate, polyethylene glycol, polyvinylpyrrolidone, acrylic acid copolymer, and maleic acid copolymer.

The thickener that can be used in the composition of the present invention is not particularly limited as long as it is commonly used in agrochemical formulations, and examples thereof include minerals such as white carbon, aluminosilicate, bentonite, montmorillonite, hectorite, attapulgite, and smectite; and polymer thickeners such as gum arabic, gum tragacanth, xanthan gum, guar gum, roast bean gum, casein, alginic acid, cellulosic polysaccharide, ethyl cellulose, polyvinyl alcohol, carboxymethyl cellulose, hydroxyethyl cellulose, hydroxypropyl cellulose, and carboxymethyl cellulose.

The defoamer that can be used in the composition of the present invention is not particularly limited as long as it is commonly used in agrochemical formulations, and examples thereof include lower alcohol-based defoamers such as methanol, ethanol, isopropanol, sec-butanol, and butanol; organic polar compound-based defoamers such as amyl alcohol, diisobutyl carbitol, tributyl phosphate, oleic acid, tall oil, metal soap, low HLB surfactants (for example, sorbitan lauric acid monoester, sorbitan lauric acid triester, polyethylene glycol fatty acid ester, acetylene glycol derivative, and pluronic nonionic surfactant), and acetylene glycol derivative; mineral oil-based defoamers such as mineral oil-surfactant blended products and mineral oil-fatty acid metal salt surfactant blended products; and silicone resin-based defoamers such as silicone resin, silicone resin-surfactant blended product, and silicone resin-inorganic powder blended product.

In the composition of the present invention, other solvents can be further used in addition to (b4) the solvent. Examples of other solvents include the following. For example, there are mentioned alcohols such as ethanol, isopropanol, and cyclohexanol; polyhydric alcohols such as ethylene glycol, diethylene glycol, triethylene glycol, propylene glycol, dipropylene glycol, tripropylene glycol, hexylene glycol, polyethylene glycol, and polypropylene glycol; ketones such as cyclohexanone and $\gamma$-butyrolactone; esters such as fatty acid methyl ester and dibasic acid methyl ester; nitrogen-containing carriers such as N-alkylpyrrolidone and N,N-dimethylacetamide; fats and oils such as coconut oil, soybean oil, rapeseed oil, sesame oil, rice oil, coconut oil, sunflower oil, sardine oil, whale oil, turpentine oil, pine oil, and coconut oil fatty acid; hydrocarbons such as normal paraffin, naphthen, isoparaffin, xylene, alkylbenzene, alkylnaphthalene, kerosine, alkylbenzene, methylnaphthalene, liquid paraffin, ligroin, lamp oil, n-decane, isododecane, tetralin, decalin, adipic acid, gluconic acid, maleic acid, lactic acid, benzoic acid, phthalic acid, malic acid, fumaric acid, succinic acid, tartaric acid, citric acid, lauric acid, oleic acid, cyclohexanone, cyclohexenylcyclohexanone, acetylacetone, acetophenone, methylbutylketone, and dioxane; epoxys such as epichlorohydrin and diglycidyl ether; phosphoric acids such as triethyl phosphate and tributyl phosphate; and sulfur-containing compounds such as dimethyl sulfoxide.

The mildew-proofing agent that can be used in the composition of the present invention is not particularly limited as long as it is commonly used in agrochemical formulations, and examples thereof include parachlorometaxylenol, polyhexamethylene biguanide hydrochloride, 1,2-benzisothiazolin-3-one, methyl parahydroxybenzoate, ethyl parahydroxybenzoate, propyl parahydroxybenzoate, butyl parahydroxybenzoate, heptyl parahydroxybenzoate, benzyl parahydroxybenzoate, paraoxybenzoate, sorbic acid, orthophenylphenol, sodium orthophenylphenate, glutardialdehyde, quaternary ammonium compound, tri-(N-chlorohexyldiazeniumdioxy)-aluminum, tetrahydro-3,5-dimethyl-2H-1,3,5-thiadiazine-2-thione, 2,5-dimethoxytetrahydrofuran, dimethylol urea, sodium N-methyldithiocarbamate, phenoxyethanol, glyoxal, glutaraldehyde, 1,3,5-tris(2-hydroxyethyl)-1,3,5-hexahydrotriazine, benzalkonium chloride, phenoxypropanol, tetramethyl acetylene diurea, povidone iodine, potassium sorbate, 2-bromo-2-nitropropane-1,3-diol, and thiazolone.

The colorant that can be used in the composition of the present invention is not particularly limited as long as it is commonly used for agrochemicals, and examples thereof include Brilliant Blue FCF, Cyanine Green G, Erio Green G, and edible tar dyes.

The bulking agent that can be used in the composition of the present invention is not particularly limited as long as it is commonly used for agrochemicals, and examples thereof include powders of mineral matter commonly used as carriers of agrochemicals, such as bentonite, talc, clay, diatomaceous earth, amorphous silicon dioxide, calcium carbonate, and magnesium carbonate; as well as powders of resins such as vinyl chloride, chlorinated polyethylene, and chlorinated polypropylene; sugars such as glucose, sugar, and lactose; carboxymethyl cellulose or salts thereof; starch or derivatives thereof; organic substances such as microcrystalline cellulose, wood flour, rice bran, wheat bran, paddy husk powder, coffee bean powder, cellulose powder, and licorice powder; water-soluble inorganic salts such as sodium sulfate, ammonium sulfate, and potassium chloride; and urea. Examples of the bentonite include bentonite HOTAKA and FUJI (both manufactured by Hojun Co., Ltd.), KUNIGEL V1 and V2 (both manufactured by Kunimine Industries Co., Ltd.), and bentonite KG-1 and KA-1 (both manufactured by Nippon Bentonite Kogyo Co., Ltd.).

The preservative that can be used in the composition of the present invention is not particularly limited as long as it is commonly used for agrochemicals, and examples thereof include sorbic acid, potassium sorbate, parachlorometaxylenol, butyl paraoxybenzoate, and sodium dehydroacetate.

The antifreezing agent that can be used in the composition of the present invention is not particularly limited as long as it is commonly used for agrochemicals, and examples thereof include ethylene glycol, diethylene glycol, propylene glycol, and glycerin.

The stabilizer that can be used in the composition of the present invention is not particularly limited as long as it is commonly used for agrochemicals, and examples thereof include an antioxidant and an ultraviolet absorber. Examples of the antioxidant include a hindered phenol-based antioxidant, a sulfur-based antioxidant, a phosphorus-based antioxidant, an amine-based antioxidant, a lactone-based antioxidant, and a vitamin E-based antioxidant. Examples of the ultraviolet absorber include inorganic compound-based ultraviolet absorbers such as titanium dioxide, and organic compound-based ultraviolet absorbers such as benzotriazole, benzophenone, triazine, benzoate, and salicylate.

The pH adjuster that can be used in the composition of the present invention is not particularly limited as long as it is commonly used for agrochemicals, and examples thereof include inorganic acids such as hydrochloric acid and phosphoric acid; organic acids such as lactic acid, citric acid, phthalic acid, and succinic acid; organic metal salts such as sodium citrate and potassium hydrogen phthalate; inorganic metal salts such as disodium hydrogen phosphate, sodium dihydrogen phosphate, dipotassium hydrogen phosphate, potassium dihydrogen phosphate, sodium carbonate, potassium carbonate, and sodium borate; hydroxides such as sodium hydroxide and potassium hydroxide; and organic amines such as triethanolamine. In addition, the pH adjusters may be used alone or in combination of two or more thereof.

The pH adjuster is usually used by diluting it with water to an appropriate concentration of 0.1 to 5 normal and adding 0.01% to 10% by weight of the diluted solution.

The agrochemical composition of the present invention can be produced by a known method. For example, a liquid formulation can be produced by dissolving (A) hydroxyisoxazole or a salt thereof and (B) an auxiliary agent that enhances the efficacy in water, and if necessary, mixing a surfactant or other blending ingredients therewith.

The water used is not particularly limited, and any water such as purified water, distilled water, ion-exchanged water, pure water, ultrapure water, sterilized water, and filtered water can be used.

The agrochemical composition of the present invention is effective against plant diseases caused by various pathogens. The major pathogens that cause plant diseases are fungi, which account for about 80% of plant diseases. Fungi (pathogens) that cause fungal diseases include Phytomyxea, oomycetes, zygomycetes, ascomycetes, basidiomycetes, and deuteromycetes. Specific examples of the pathogenic fungi include, but are not limited to, Phytomyxea such as a pathogen causing a clubroot disease, a pathogen causing a potato powdery scap disease, and a pathogen causing sugar beet rhizomania disease; oomycetes such as Phytophthora spp., a pathogen causing a downy mildew disease, Pythium spp., and Aphanomyces spp.; zygomycetes such as Rhizopus spp.; ascomycetes such as a pathogen causing a peach leaf curl disease, a pathogen causing a corn sesame leaf blight disease, a pathogen causinga rice blast disease, a pathogen causing a powdery mildew disease, a pathogen causing anthracnose, a pathogen causing a Fusarium blight disease, a pathogen causing a "Bakanae" disease, and a pathogen causing a snow blight disease; basidiomycetes such as a pathogen causing a leaf rust disease, a pathogen causing a smut disease, a pathogen causing a violet root rot disease, a pathogen causing a blister blight disease, and a pathogen causing a sheath blight disease; and deuteromycetes such as a pathogen causing a gray mold disease, Alternaria spp., Fusarium spp., Penicillium spp., Rhizoctonia spp., and a pathogen causing a southern blight disease.

The agrochemical composition of the present invention and the control agent containing the agrochemical composition can further enhance a control effect against a plant disease caused by any of Aphanomyces spp., Pythium spp., Fusarium spp., Rhizoctonia spp., Screlotium spp., Cochiliobolus spp., Collletotrichum spp., Magnaporthe spp., Rosellinia spp., and Sclerotinia spp..

The agrochemical composition of the present invention can further contain, as an active ingredient, at least one compound selected from the group consisting of picarbutrazox, cyazofamid, amisulbrom, and a salt thereof. In this case, the agrochemical composition of the present invention and the control agent containing the agrochemical composition can further enhance a control effect against a plant disease caused by any of Aphanomyces spp., Pythium spp., Fusarium spp., Rhizoctonia spp., Screlotium spp., Cochiliobolus spp., Collletotrichum spp., Magnaporthe spp., Rosellinia spp., Sclerotinia spp., Rhizopus spp., Phytophthora spp. , Albugo spp., Bremia spp., Peronospora spp., Pseudoperonospora spp., Plasmopara spp., Sclerospora spp., Plasmodiophora spp, and Spongospora spp..

The composition of the present invention is effective against the following types of plant diseases. Specific diseases and pathogens thereof are shown below, without being limited thereto.

With regard to rice, blast (Magnaporthe grisea), sheath blight (Thanatephorus cucumeris), brown snow blight (Ceratobasidium setariae), typhula brown snow blight (Waitea circinata), brown sheath blight (Thanatephorus cucumeris), globular sclerotial disease (Sclerotium hydrophilum), bordered sheath spot (Wairea circinata), leaf smut (Entyloma dactylidis), stem rot (Magnaporthe salvinii), gray sclerotial disease (Ceratobasidium cornigerum), brown spot (Cochliobolus miyabeanus), brown stripe (Sphaerulina oryzina), "Bakanae" disease (Gibberella fujikuroi), seedling damping-off (Pythium graminicola, Pythium arrhenomanes, Pythium spp., Fusarium spp., Fusarium avenaceum, Fusarium solani, Fusarium roseum, Trichoderma viride, Rhizopus oryzae, Rhizopus chinensis, Rhizopus javanicus, Rhizopus arrhizus, Rhizoctonia solani, Mucor fragilis, Phoma spp.), seedling rot (Pythium spp., Achlya spp., Dictyuchus spp.), false smut (Claviceps virens), kernel smut (Tilletia barclayana), Gibberella ear rot (Gibberella zeae), brown rice (Curvularia spp., Alternaria spp.), crazy top (Sclerophthora macrospora), bacterial leaf blight (Xanthomonas oryzae pv. oryzae), bacterial brown stripe (Acidovorax avenae subsp. avenae), bacterial palea browning (Erwinia ananas), bacterial seedling blight (Burkholderia plantarii), bacterial grain rot (Burkholderia glumae), sheath brown rot (Pseudomonas fuscovaginae), halo blight (Pseudomonas syringae pv. oryzae), foot rot (Erwinia chrysanthemi), yellow dwarf (Phytoplasma oryzae), stripe (Rice stripe tenuivirus), and streaked dwarf (Rice dwarf reovirus);

with regard to wheat, powdery mildew (Blumeria graminis f.sp. hordei; f.sp. tritici), rust (Puccinia striiformis, Puccinia graminis, Puccinia recondita, Puccinia hordei), stripe (Pyrenophora graminea), net blotch (Pyrenophora teres), scab (Gibberella zeae, Fusarium asiaticum, Fusarium culmorum, Fusarium avenaceum, Monographella nivalis), snow mold (Typhula incarnata, Typhula ishikariensis, Monographella nivalis), loose smut (Ustilago nuda), stinking smut (Tilletia caries, Tilletia controversa), eye spot (Pseudocercosporella herpotrichoides), foot rot (Ceratobasidium gramineum), scald (Rhynchosporium secalis), speckled leaf blotch (Septoria tritici), glume blotch (Phaeosphaeria nodorum), seedling damping-off (Fusarium spp., Pythium spp., Rhizoctonia spp., Septoria spp., Pyrenophora spp.), damping-off (Gaeumannomyces graminis), anthracnose (Colletotrichum graminicola), ergot (Claviceps purpurea), spot blotch (Cochliobolus sativus), and bacterial black node (Pseudomonas syringae pv. syringae);

with regard to corn, scab (Gibberella zeae and the like), seedling damping-off (Fusarium avenaceum, Penicillium spp, Pythium spp., Rhizoctonia spp.), rust (Puccinia sorghi), southern leaf spot (Cochliobolus heterostrophus), covered smut (Ustilago maydis), anthracnose (Colletotrichum graminicola), northern leaf spot (Cochliobolus carbonum), bacterial brown stripe (Acidovorax avenae subsp. avenae), bacterial stripe (Burkholderia andropogonis), bacterial stalk rot (Erwinia chrysanthemi pv. zeae), and bacterial wilt (Erwinia stewartii); with regard to grape, downy mildew (Plasmopara viticola), rust (Physopella ampelopsidis), powdery mildew (Uncinula necator), sphaceloma scab (Elsinoe ampelina), ripe rot (Glomerella cingulata, Colletotrichum acutatum), black rot (Guignardia bidwellii), stem rot (Phomopsis viticola), sooty blotch (Zygophiala jamaicensis), gray mold (Botrytis cinerea), bud blight (Diaporthe medusaea), violet root rot (Helicobasidium mompa), white root rot (Rosellinia necatrix), and crown gall (Agrobacterium vitis);

with regard to apple; powdery mildew (Podosphaera leucotricha), black spot (Venturia inaequalis), Alternaria blotch (Alternaria mali), rust (Gymnosporangium yamadae), Monilia leaf blight (Monilinia mali), Valsa canker (Valsa ceratosperma), ring rot (Botryosphaeria berengeriana), anthracnose (Colletotrichum acutatum, Glomerella cingulata), sooty blotch (Zygophiala jamaicensis), sooty blotch (Gloeodes pomigena), black spot (Mycosphaerella pomi), violet root rot (Helicobasidium mompa), white root rot (Rosellinia necatrix), canker (Phomopsis mali, Diaporthe tanakae), blotch (Diplocarpon mali), fire blight (Erwinia amylovora), crown gall (Agrobacterium tumefaciens), and hairy root (Agrobacterium rhizogenes) ; with regard to pear, Alternaria leaf spot (Alternaria kikuchiana), black spot (Venturia nashicola), rust (Gymnosporangium asiaticum), ring rot (Botryosphaeria berengeriana f.sp. piricola), Phomopsis canker (Phomopsis fukushii), bacterial shoot blight (Erwinia sp.), crown gall (Agrobacterium tumefaciens), Erwinia rusty canker (Erwinia chrysanthemi pv. chrysanthemi), and bacterial blossom blight and canker (Pseudomonas syringae pv. syringae); with regard to common pear, Phytophthora blight (Phytophthora cactorum, Phytophthora syringae), and bacterial shoot blight (Erwinia sp.); with regard to peach, black spot (Cladosporium carpophilum), Phomopsis rot (Phomopsis sp.), Phytophthora blight (Phytophthora sp.), anthracnose (Colletotrichum gloeosporioides), leaf curl (Taphrina deformans), bacterial shot hole (Xhanthomonas campestris pv. pruni), crown gall (Agrobacterium tumefaciens) ; with regard to sweet cherry, anthracnose (Glomerella cingulata), young fruit rot (Monilinia kusanoi), brown rot blossom blight and fruit rot (Monilinia fructicola), crown gall (Agrobacterium tumefaciens), bacterial gummosis (Pseudomonas syringae pv. syringae); with regard to persimmon, anthracnose (Glomerella cingulata), leaf fall (Cercospora kaki; Mycosphaerella nawae), powdery mildew (Phyllactinia kakikora), crown gall (Agrobacterium tumefaciens); with regard to citrus, black spot (Diaporthe citri), green mold (Penicillium digitatum), blue mold (Penicillium italicum), spot anthracnose (Elsinoe fawcettii), brown rot (Phytophthora citrophthora), bacterial canker (Xhanthomonas campestris pv. citri), bacterial brown spot (Pseudomonas syringae pv. syringae), Citrus Huanglongbing (HLB) (Liberibactor asiaticus), crown gall (Agrobacterium tumefaciens) ; with regard to banana, black leaf streak (Pseudocercospora fijiensis, Pseudocercospora musae, Pseudocercospora eumusae), banana anthracnose (Colletotrichum musae), Panama disease (Fusarium oxysporum), black spot (Macrophoma musae), and stem-end rot (Colletotrichum musae, Ceratocytis paradoxa, Lasiodiiplodia theobromae);

with regard to tomato, cucumber, beans, strawberry, potato, cabbage, eggplant, lettuce, and the like, gray mold (Botrytis cinerea); with regard to tomato, cucumber, eggplant, lettuce, strawberry, cabbage, rapeseed, beans, potato, and the like, Sclerotinia rot (Sclerotinia sclerotiorum); with regard to various vegetables such as tomato, cucumber, legume, daikon, watermelon, melon, eggplant, rapeseed, pepper, spinach, okra, sugar beet, and the like, seedling damping-off (Rhizoctonia spp., Pythium spp., Fusarium spp., Phythophthora spp., Sclerotinia sclerotiorum, and the like); bacterial wilt of the family Solanaceae (Ralstonia solanacearum); with regard to melons, downy mildew (Pseudoperonospora cubensis), powdery mildew (Sphaerotheca fuliginea), anthracnose (Colletotrichum orbiculare), gummy stem blight (Didymella bryoniae), stem rot (Fusarium oxysporum), Phytophthora blight (Phytophthora parasitica, Phytophthora melonis, Phytophthora nicotianae, Phytophthora drechsleri, Phytophthora capsici, and the like), bacterial brown spot (Xhanthomonas campestris pv.cucurbitae), bacterial soft rot (Erwinia carotovora subsp. carotovora), Rhizopus rot (Rhizopus stolonifer), angular leaf spot (Pseudomonas syringae pv. lachrymans), marginal blight (Pseudomonas marginalis pv. marginalis), crown gall (Streptomyces sp.), hairy root (Agrobacterium rhizogenes), and cucumber mosaic virus; with regard to tomato, ring rot (Alternaria solani), leaf mold (Fulvia fulva), late blight (Phytophthora infestans), Fusarium wilt (Fusarium oxysporum), crown foot and root rot (Fusarium oxysporum), Verticillium wilt (Verticillium dahliae), root rot (Pythium myriotylum, Pythium dissotocum), anthracnose (Colletotrichum gloeosporioides), bacterial canker (Clavibacter michiganensis), pith necrosis (Pseudomonas corrugata), bacterial black leaf spot (Pseudomonas viridiflava), bacterial soft rot (Erwinia carotovora subsp. carotovora), bacterial leaf gall (Crynebacterium sp.), yellows (Phytoplasma asteris), and yellow dwarf (Tabaco leaf curl subgroup III geminivirus); with regard to eggplant, powdery mildew (Sphaerotheca fuliginea, and the like), leaf mold (Mycovellosiella nattrassii), late blight (Phytophthora infestans), brown rot (Phytophthora capsici), Verticillium wilt (Verticillium dahliae), bacterial brown spot (Pseudomonas cichorii), pith necrosis (Pseudomonas corrugata), bacterial stem and root rot (Erwinia chrysanthemi), bacterial soft rot (Erwinia carotovora subsp. carotovora), and angular leaf spot (Pseudomonas sp.); with regard to strawberry, powdery mildew (Sphaerotheca aphanis var. aphanis), yellows (Fusarium oxysporum), anthracnose (Colletotrichum acutatum, Glomerella cingulata), bacterial soft rot (Rhizopus nigricans), Phytophthora rot (Phytophthora nicotianae, and the like), fruit rot (Pythium ultimum), bacterial wilt (Ralstonia solanacearum), bacterial angular leaf spot (Xhanthomonas campestris), and bacterial bud blight (Pseudomonas marginalis pv. marginalis); with regard to bell pepper, diplodia rot (Rhizopus stolonifer); with regard to spinach, wilt (Fusarium oxysporum), foot rot (Rhizoctonia solani), damping-off (Rhizoctonia solani, Fusarium spp., Pythium spp., Aphanomyces spp.), and downy mildew (Peronospora farinosa); with regard to carrot, leaf blight (Alternaria dauci), bacterial gall (Rhizobacter dauci), crown gall (Agrobacterium tumefaciens), Streptomyces spot anthracnose (Streptomyces spp.), and bacterial soft rot (Erwinia carotovora subsp. carotovora); with regard to tobacco, rust (Alternaria alternata), powdery mildew (Erysiphe cichoracearum), anthracnose (Colletotrichum gloeosporioides), Phytophthora rot (Phytophthora nicotianae), wild fire (Pseudomonas syringae pv. tabaci), Wisconsin bacterial leaf spot (Pseudomonas syringae pv. mellea), hollow stalk (Erwinia carotovora subsp. carotovora), damping-off (Ralstonia solanacearum), and tobacco mosaic virus;

with regard to rapeseed, Alternaria leaf spot (Alternaria brassicae), black rot (Xhanthomonas campestris pv. campestris), bacterial black leaf spot (Pseudomonas syringae pv. maculicola), and bacterial soft rot (Erwinia carotovora); with regard to vegetables of the family Brassicaceae, Alternaria leaf spot (Alternaria brassicae, and the like), white spot (Cercosporella brassicae), root rot (Phoma lingam), root knot (Plasmodiophora brassicae), downy mildew (Peronospora parasitica), black rot (Xhanthomonas campestris pv. campestris), bacterial black leaf spot (Pseudomonas syringae pv. maculicola), and bacterial soft rot (Erwinia carotovora subsp. carotovora); with regard to cabbage, foot rot (Thanatephorus cucumeris), Pythium rot (Pythium ultimum), Verticillium wilt (Verticillium dahliae), and yellows (Fusarium oxysporum); with regard to Chinese cabbage, bottom rot (Rhizoctonia solani) and yellows (Verticillium dahliae); with regard to lettuce, big-vein disease (Olpidiumbrassicae, Lettuce big vein virus), bacterial soft rot (Erwinia carotovora), leaf spot (Cercospora longissima), downy mildew (Bremia lactucae), root rot (Fusarium oxysporum), and basal canker (Thanatephorus cucumeris); with regard to green onion, rust (Puccinia allii), Fusarium wilt (Fusarium oxysporum), crown foot and root rot (Fusarium redolens), Alternaria leaf spot (Alternaria porri), southern blight (Sclerotium rolfsii), leaf blight (Phytophthora porri), bulb black rot (Sclerotium cepivorum), and downy mildew (Peronospora destructor); with regard to onion, bacterial canker (Curtobacterium flaccumfaciens), dry rot (Fusarium oxysporum), bacterial soft rot (Erwinia carotovora subsp.

carotovora), angular leaf spot (Pseudomonas syringae pv. syringae), soft rot (Erwinia rhapontici), scale rot (Burkholderia gladioli), and yellows (Phytoplasma asteris); with regard to garlic, bacterial soft rot (Erwinia carotovora subsp. carotovora) and spring rot (Pseudomonas marginalis pv. marginalis) ; with regard to chives, dry rot (Fusarium oxysporum);

with regard to soybean, violet leaf spot (Cercospora kikuchii), sudden death syndrome (Fusarium virguliforme, Fusarium brasiliense), sphaceloma scab (Elsinoe glycines), black spot (Diaporthe phaseolorum), Rhizoctonia root rot (Rhizoctonia solani), stem rot (Phytophthora sojae), downy mildew (Peronospora manshurica), rust (Phakopsora pachyrhizi), anthracnose (Colletotrichum truncatum, and the like), leaf scorch (Xhanthomonas campestris pv. glycines), and angular leaf spot (Pseudomonas syringae pv. glycinea); with regard to kidney bean, anthracnose (Colletotrichum lindemuthianum), Aphanomyces root rot (Aphanomyces euteiches), bacterial wilt (Ralstonia solanacearum), bacterial halo spot (Pseudomonas syringae pv. phaseolicola), bacterial brown spot (Pseudomonas viridiflava), leaf scorch (Xhanthomonas campestris pv. phaseoli), and southern blight (Sclerotium rolfsii) ; with regard to peanut, black leaf blight (Mycosphaerella berkeleyi), brown leaf spot (Mycosphaerella arachidis), southern blight (Sclerotium rolfsii), and bacterial wilt (Ralstonia solanacearum); with regard to pea, powdery mildew (Erysiphe pisi), Aphanomyces root rot (Aphanomyces euteiches), root rot (Fusarium solani), downy mildew (Peronospora pisi), bacterial blight (Pseudomonas syringae pv. pisi), bacterial stem rot (Xhanthomonas campestris pv. pisi); with regard to fava bean, downy mildew (Peronospora viciae) and Phytophthora rot (Phytophthora nicotianae) ;

with regard to white potato, early blight (Alternaria solani), black scurf (Thanatephorus cucumeris), late blight (Phytophthora infestans), silver scurf (Helminthosporium solani), dry rot (Fusarium oxysporum, Fusarium solani, Fusarium avenaceum), powdery scab (Spongospora subterranea), bacterial wilt (Ralstonia solanacearum), black leg (Erwinia carotovora subsp. atroseptica), spot anthracnose (Streptomyces scabies, Streptomyces acidiscabies), bacterial soft rot (Erwinia carotovora subsp. carotovora), slimy rot (Crostridium spp.), and ring rot (Clavibacter michiganensis subsp. sepedonicus) ; with regard to sweet potato, damping-off (Streptomyces ipomoeae), stem rot (Fusarium oxysporum), and soft rot (Rhizopus nodosus, Rhizopus oryzae); with regard to ginger, rhizome rot (Pythium zingiberis);

with regard to sugar beet, brown leaf spot (Cercospora beticola), downy mildew (Peronospora schachtii), black root rot (Aphanomyces cochioides), Fusarium yellows (Fusarium oxysporum), Phoma root rot (Phoma betae), crown gall (Agrobacterium tumefaciens), spot anthracnose (Streptomyces scabies), angular leaf spot (Pseudomonas syringae pv. aptata), damping-off (Rhizoctonia candida), damping-off (Trichoderma spp.), and seedling damping-off (Pythium spp., Pythium aphanidermatum, Pythium ultimum, Pythium debaryaum, Fusarium spp., Phoma betae, Rhizoctonia solani, Aphanomyces cochioides);

with regard to cotton, damping-off (Fusarium oxysporum); with regard to sunflower, stem rot (Sclerotinia sclerotiorum), angular leaf spot (Xhanthomonas campestris pv. malvacearum), hollow stalk (Erwinia carotovora subsp. carotovora), and angular leaf spot (Pseudomonas syringae pv. helianthi) ; with regard to rose, black spot (Diplocarpon rosae), powdery mildew (Sphaerotheca pannosa, and the like), blight (Phytophthora megasperma), downy mildew (Peronospora sparsa), and crown gall (Agrobacterium tumefaciens); with regard to chrysanthemum, brown leaf spot (Septoria obesa), white rust (Puccinia horiana), Phytophthora fruit rot (Phytophthora cactorum), angular leaf spot (Pseudomonas cichorii), bacterial soft rot (Erwinia carotovora subsp. carotovora), crown gall (Agrobacterium tumefaciens), hairy root (Agrobacterium rhizogenes), and virescence (Phytoplasma aurantifolia); with regard to lily, soft rot (Rhizopus oryzae); with regard to tea, net blast (Exobasidium reticulatum), white scab (Elsinoe leucospila), anthracnose (Colletotrichum theae-sinensis), gray blight (Pestalotiopsis longiseta), bacterial shoot blight (Pseudomonas syringae pv. theae), bacterial canker (Xhanthomonas campestris pv. theicola), and witches' broom (Pseudomonas sp.); and with regard to turf, brown patch (Rhizoctonia solani), Rhizoctonia rot · large patch (Rhizoctonia solani), yellow patch (Ceratobasidium graminuem), dollar spot (Sclerotinia homoeocarpa), Curvularia leaf blight (Curvularia sp.), rust (Puccinia zoysiae), Helminthosporium leaf blight (Cochliobolus sp.), scald (Rhynchosporium secalis), Fusarium blight (), damping-off (Gaeumannomyces graminis), anthracnose (Colletotrichum sp.), typhula snow blight (Typhula incarnata), typhula snow blight (Typhula ishikariensis), Sclerotinia snow blight (Myriosclerotinia borealis), fairy rings (Marasmius oreades, and the like), Pythium red blight (Pythium aphanidermatum), Pythium blight (Pythium vanterpoolii, Pythium periplocum, Pythium graminicola, Pythium arrhenomanes, Pythium catenulatum, Pythium volutum, Pythium aristosporum, and the like), brown blight (Laetisaria fuciformis), and blast (Pyricularia grisea).

The composition of the present invention may be applied alone and may be applied simultaneously or sequentially in combination with an agrochemical such as a fungicide, a pesticide, a herbicide, an acaricide, a nematocide, or a plant growth regulator; a soil conditioner, or a fertilizer material.

Examples of fungicides that are applied in combination include a phenylamide-based fungicide, a mitotic inhibitor, a cell division inhibitor, a succinate dehydrogenase inhibitor (SDHI agent), a quinone outside inhibitor (QoI agent), a quinone inside inhibitor (QiI agent), an oxidative phosphorylation uncoupling inhibitor, a quinone outside stigmatellin binding subsite inhibitor (QoSI agent), an amino acid biosynthesis inhibitor, a protein biosynthesis inhibitor, a signal transduction inhibitor, a lipid biosynthesis inhibitor, a cell membrane biosynthesis inhibitor, a demethylation inhibitor (DMI agent), an amine-based fungicide, a 3-keto reductase inhibitor in C4-position demethylation of sterol biosynthesis, a squalene epoxidase inhibitor of sterol biosynthesis, a cell wall biosynthesis inhibitor, a melanin biosynthesis inhibitor, a host plant resistance inducer, a dithiocarbamate-based fungicide, a phthalimide-based fungicide, a guanidine-based fungicide, a multi-action point contact-active fungicide, and other fungicides. Examples of pesticides, acaricides, and nematocides that are applied in combination include a carbamate-based acetylcholinesterase (AChE) inhibitor, an organic phosphorus-based acetylcholinesterase (AChE) inhibitor, a GABA-gated chloride channel blocker, a sodium channel modulator, a nicotinic acetylcholine receptor (nAChR) competitive modulator, a nicotinic acetylcholine receptor (nAChR) allosteric modulator, a glutamate-gated chloride channel (GluCl) allosteric modulator, a juvenile hormone mimic, a non-specific (multi-site) inhibitor, a mite growth inhibitor, a mitochondrial ATP synthase inhibitor, an oxidative phosphorylation uncoupler that disturbs a proton gradient, a nicotinic acetylcholine receptor (nAChR) channel blocker, a chitin biosynthesis inhibitor type 0, a chitin biosynthesis inhibitor type 1, a molting inhibitor for winged insects of the order Diptera, a molting hormone (ecdysone) receptor agonist, a mitochondrial electron transport system complex III inhibitor, a mitochondrial electron transport system complex I inhibitor (METI), a voltage-gated sodium channel blocker, an acetyl CoA carboxylase inhibitor, a mitochondrial electron transport system complex IV inhibitor, a mitochondrial electron transport system complex II inhibitor, a ryanodine receptor modulator, a chordotonal organ modulator, a GABA-gated chloride (chlorine ion) channel allosteric modulator, target site unspecified, and other agents. Examples of herbicides that are applied in combination include an acetyl CoA carboxylase (ACCase) inhibitor, an acetolactate synthase (ALS) inhibitor, a photosynthesis (photochemical system II) inhibitor, a photochemical system I electron conversion system-inhibiting herbicide, a protoporphyrinogen oxidase (PPO) inhibitor, an inhibitor of carotenoid biosynthesis at a level of phytoene desaturase (PDS), a 4-hydroxyphenylpyruvate dioxygenase (4-HPPD) inhibitor, a carotenoid biosynthesis (target site unknown) inhibitor, a 1-deoxy-D-xylulose-5-phosphate (DOXP) synthase inhibitor, an EPSP synthase inhibitor, a glutamine synthetase inhibitor, a dihydropteroate (DHP) synthase inhibitor, a microtubule polymerization inhibitor, a mitosis/microtubule formation inhibitor, a VLCFA inhibitor, a cell wall (cellulose) synthesis inhibitor, an uncoupling (membrane disruption) herbicide, a lipid synthesis (non-ACCase) inhibitor, an indole acetic acid-like activity (synthetic auxin)-based herbicide, an auxin transport inhibitor, and other herbicides.

These agrochemicals may be used alone or in combination of one or more thereof, but the present invention is not limited thereto.

Examples of the fungicide include phenylamide-based fungicides such as benalaxyl, benalaxyl-M or kiralaxyl, furalaxyl, metalaxyl, metalaxyl-M or mefenoxam, oxadixyl, and ofurace;

mitotic inhibitors and cell division inhibitors such as benomyl, carbendazim, fuberidazole, thiabendazole, thiophanate, thiophanate-methyl, diethofencarb, zoxamide, ethaboxam, pencycuron, fluopicolide, and phenamacril;

succinate dehydrogenase inhibitors (SDHI agents) such as benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penthiopyrad, penflufen, pydiflumetofen, sedaxane, thifluzamide, pyraziflumid, isoflucypram, fluindapyr, inpyrfluxam, and pyrapropoyne;

quinone outside inhibitors (QoI agents) such as azoxystrobin, coumoxystrobin, dimoxystrobin, enoxastrobin, famoxadone, fenamidone, fenaminstrobin, flufenoxystrobin, fluoxastrobin, kresoxim-methyl, mandestrobin, metominostrobin, orysastrobin, picoxystrobin, pyraclostrobin, pyrametostrobin, pyraoxystrobin, pyribencarb, triclopyricarb, trifloxystrobin, and metyltetraprole;

quinone inside inhibitors (QiI agents) such as amisulbrom, cyazofamid, and fenpicoxamid;

oxidative phosphorylation uncoupling inhibitors such as binapacryl, meptyldinocap, dinocap, and fluazinam;

quinone outside stigmatellin binding subsite inhibitors (QoSI agents) such as ametoctradin;

amino acid biosynthesis inhibitors such as cyprodinil, mepanipyrim, and pyrimethanil;

protein biosynthesis inhibitors such as streptomycin, blasticidin-S, oxytetracycline, and kasugamycin;

signal transduction inhibitors such as fenpiclonil, fludioxonil, quinoxyfen, proquinazid, chlozolinate, dimethachlone, iprodione, procymidone, and vinclozolin;

lipid biosynthesis inhibitors and cell membrane biosynthesis inhibitors such as edifenphos, iprobenfos, pyrazophos, biphenyl, chloroneb, dicloran, isoprothiolane, quintozene, tecnazene, tolclofos-methyl, echlomezol or etridiazole, iodocarb, propamocarb, prothiocarb, fluoxapiprolin, and oxathiapiprolin;

demethylation inhibitors (DMI agents) such as azaconazole, bitertanol, bromuconazole, cyproconazole, difenoconazole, diniconazole, diniconazole-M, [b-12.8] epoxiconazole, etaconazole, fenarimol, fenbuconazole, fluquinconazole, quinconazole, flusilazole, flutriafol, hexaconazole, imazalil, imibenconazole, ipconazole, metconazole, myclobutanil, nuarimol, oxpoconazole, oxpoconazole fumarate, pefurazoate, penconazole, prochloraz, propiconazole, prothioconazole, pyrifenox, pyrisoxazole, simeconazole, tebuconazole, tetraconazole, triadimefon, triadimenol, triflumizole, triforine, triticonazole, mefentrifluconazole, and ipfentrifluconazole;

amine-based fungicides such as aldimorph, dodemorph, fenpropimorph, tridemorph, fenpropidin, piperalin, and spiroxamine;

3-keto reductase inhibitors in C4-position demethylation of sterol biosynthesis such as fenhexamid and fenpyrazamine;

squalene epoxidase inhibitors of sterol biosynthesis such as pyributicarb, [b-15.2] naftifine, and [b-15.3] terbinafine;
cell wall biosynthesis inhibitors such as polyoxins, dimethomorph, flumorph, pyrimorph, benthiavalicarb, benthivalicarb-isopropyl, iprovalicarb, mandipropamid, and valifenalate;
melanin biosynthesis inhibitors such as phthalide or fthalide, pyroquilone, tricyclazole, carpropamid, diclocymet, fenoxanil, and tolprocarb;
host plant resistance inducers such as acibenzolar-S-methyl, probenazole, tiadinil, isotianil, laminarin, and dichlobentiazox;
dithiocarbamate-based fungicides such as mancozeb, manzeb, maneb, metiram, propineb, thiram, zineb, ziram, and ferbam;
phthalimide-based fungicides such as captan, captafol, folpet, and fluorofolpet;
guanidine-based fungicides such as guazatine, iminoctadine, iminoctadine albesilate, and iminoctadine triacetate;
multi-action point contact-active fungicides such as copper oxychloride, copper (II) hydroxide, copper hydroxide sulfate, organocopper compound, dodecylbenzenesulphonic acid bisethylenediamine copper [II] salt (DBEDC), sulphur, fluoroimide, dichlofluanid, tolylfluanid, anilazine, dithianon, chinomethionat or quinomethionate, an extract from the cotyledons of sweet lupin seedlings (BLAD: Banda de Lupinus albus doce), and chlorothalonil; and
other fungicides such as dipymetitrone, bupirimate, dimethirimol, ethirimol, triphenyltin acetate (fentin acetate), triphenyltin chloride (fentin chloride), triphenyltin hydroxide (fentin hydroxide), oxolinic acid, octhilinone, fosetyl, phosphorous acid, sodium phosphite, ammonium phosphite, potassium phosphite, D-tagatose, tecloftalam, triazoxide, flusulfamide, diclomezine, silthiofam, diflumetorim, methasulfocarb, cyflufenamid, metrafenone, pyriofenone, dodine, flutianil, ferimzone, tebufloquin, validamycins, cymoxanil, picarbutrazox, Quinofumelin, aminopyrifen, pyridachlometyl, ipflufenoquin, fluopimomide, and florylpicoxamid.

The fungicide that is applied in combination is preferably amisulbrom, cyazofamid, or picarbutrazox.

Examples of pesticides include carbamate-based acetylcholinesterase (AChE) inhibitors such as phosphocarb, alanycarb, butocarboxim, butoxycarboxim, thiodicarb, thiofanox, aldicarb, bendiocarb, benfuracarb, carbaryl, carbofuran, carbosulfan, ethiofencarb, fenobucarb, formetanate, furathiocarb, isoprocarb, methiocarb, methomyl, oxamyl, pirimicarb, propoxur, trimethacarb, XMC (3,5-xylyl methylcarbamate), allyxycarb, aldoxycarb, bufencarb, butacarb, carbanolate, metolcarb, xylylcarb, fenothiocarb, xylylcarb, and bendiocarb;

organic phosphorus-based acetylcholinesterase (AChE) inhibitors such as acephate, azamethiphos, azinphos-methyl, azinphos-ethyl, ethephon, cadusafos, chlorethoxyfos, chlorfenvinphos, chlormephos, chlorpyrifos, chlorpyrifos-methyl, coumaphos, cyanophos, demeton-S-methyl, diazinon, dichlofenthion, dichlorvos, dicrotophos, dimethoate, dimethylvinphos, disulfoton, O-ethyl O-4-nitrophenyl phenylphosphonothioate, ethion, ethoprophos, famphur, fenamiphos, fenitrothion, fenthion, fosthiazate, heptenophos, isofenphos-methyl, isocarbophos, isoxathion, malathion, mecarbam, methamidophos, methidathion, mevinphos, monocrotophos, naled, omethoate, oxydemeton-methyl, parathions, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, thiometon, triazophos, trichlorfon, vamidothion, chlorothion, bromfenvinfos, bromophos, bromophos-ethyl, butathiofos, carbophenothion, chlorphoxim, sulprofos, diamidafos, tetrachlorvinphos, propaphos, mesulfenfos, dioxabenzofos, etrimfos, oxydeprofos, formothion, fensulfothion, isazofos, imicyafos, isamidofos, thionazin, and fosthietan;
GABA-gated chloride channel blockers such as chlordane, endosulfan, lindane, dienochlor, ethiprole, fipronil, and acetoprole;
sodium channel modulators such as acrinathrin, allethrin [(1R)-isomer], bifenthrin, bioallethrin, bioallethrin S-cyclopentenyl isomer, bioresmethrin, cycloprothrin, cyfluthrin, beta-cyfluthrin, cyhalothrin, gamma-cyhalothrin, lambda-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, ethofenprox, fenpropathrin, fenvalerate, flucythrinate, flumethrin, tau-fluvalinate, halfenprox, imiprothrin, methothrin, metofluthrin, epsilon-metofluthrin, momfluorothrin, epsilon-momfluorothrin, permethrin, phenothrin [(1R)-trans-isomer], prallethrin, resmethrin, kadethrin, silafluofen, tefluthrin, tetramethrin, tetramethrin [(1R)-isomer], tralomethrin, transfluthrin, ZXI8901 (3-(4-bromophenoxy)phenyl]-cyanomethyl 4-(difluoromethoxy)-$\alpha$-(1-methylethyl)benzeneacetate), biopermethrin, furamethrin, profluthrin, flubrocythrinate, dimefluthrin, dichloro-diphenyl-trichloroethane (DDT), methoxychlor, phenothrin, and fluvalinate;
nicotinic acetylcholine receptor (nAChR) competitive modulators such as acetamiprid, clothianidin, dinotefuran, imidacloprid, nitenpyram, thiacloprid, thiamethoxam, nicotine, nicotine sulfate, sulfoxaflor, flupyradifurone, and triflumezopyrim;
nicotinic acetylcholine receptor (nAChR) allosteric modulators such as spinosad and spinetoram;
glutamate-gated chloride channel (GluCl) allosteric modulators such as abamectin, emamectin benzoate, lepimectin, and milbemectin;

juvenile hormone mimics such as hydroprene, kinoprene, methoprene, fenoxycarb, and pyriproxyfen;

non-specific (multi-site) inhibitors such as methyl bromide, chloropicrin, cryolite, sulfuryl fluoride, borax, boric acid, disodium octaborate, sodium metaborate, tartar emetic, dazomet, metam, and carbam sodium (metham sodium);

chordotonal organ TRPV channel modulators such as pymetrozine, pyrifluquinazon, and Afidopyropen;

mite growth inhibitors such as clofentezine, diflovidazin, hexythiazox, and etoxazole;

mitochondrial ATP synthase inhibitors such as diafenthiuron, azocyclotin, cyhexatin, fenbutatin oxide, propargite, and tetradifon;

oxidative phosphorylation uncouplers that disturb a proton gradient, such as chlorfenapyl, dinitro-ortho-cresol (DNOC), binapacryl, and sulfluramid;

nicotinic acetylcholine receptor (nAChR) channel blockers such as bensultap, cartap hydrochloride, thiocyclam, and monosultap;

chitin biosynthesis inhibitor type 0 such as bistrifluron, chlorfluazuron, diflubenzuron, flucycloxuron, flufenoxuron, hexaflumuron, lufenuron, novaluron, noviflumuron, teflubenzuron, and triflumuron;

chitin biosynthesis inhibitor type 1 such as buprofezin;

molting inhibitors for winged insects of the order Diptera such as cyromazine;

molting hormone (ecdysone) receptor agonists such as chromafenozide, halofenozide, methoxyfenozide, and tebufenozide;

octopamine receptor agonists such as amitraz;

mitochondrial electron transport system complex III inhibitors such as hydramethylnon, acequinocyl, fluacrypyrim, and bifenazate;

mitochondrial electron transport system complex I inhibitors (METIs) such as fenazaquin, fenpyroximate, pyridaben, pylimidifen, tebufenpyrad, tolfenpyrad, and rotenone;

voltage-gated sodium channel blockers such as indoxacarb and metaflumizone;

acetyl-CoA carboxylase inhibitors such as spirodiclofen, spiromesifen, and spirotetramat;

mitochondrial electron transport system complex IV inhibitors such as aluminum phosphide, calcium phosphide, phosphine, zinc phosphide, calcium cyanide, potassium cyanide, and sodium cyanide;

mitochondrial electron transport system complex II inhibitors such as cyenopyrafen, cyflumetofen, and pyflubumide;

ryanodine receptor modulators such as chlorantraniliprole, cyantraniliprole, flubendiamide, and cyclaniliprole;

chordotonal organ modulators, target site unspecified, such as flonicamid;

GABA-gated chloride (chlorine ion) channel allosteric modulators such as broflanilide and fluxametamide; and

other agents such as azadirachtin, benzoximate, phenisobromolate, chinomethionat, dicofol, pyridalyl, bromopropylate, triazamate, dicyclanil, dinobuton, dinocap, hydrogen cyanide, methyl iodide, karanjin, mercury chloride, methyl isothiocyanate, pentachlorophenol, phosphine, piperonyl butoxide, polynactin complex (polynactins), sabadilla, sulcofuron salt (sulcofuron-sodium), tribufos, aldrin, amidithion, amidothioate, aminocarb, amiton, aramite, athidathion, azothoate, barium polysulphide, benclothiaz, 5-(1,3-benzodioxole-5-yl)-3-hexylcyclohexa-2-enone, 1,1-bis(4-chlorophenyl)-2-ethoxyethanol, butonate, butopyronoxyl, 2-(2-butoxyethoxy)ethyl thiocyanate, camphechlor, chlorbenside, chlordecone, chlordimeform, chlorfenethol, chlorfenson, fluazuron, metaldehyde, bialaphos, levamisole hydrochloride (levamisol), amidoflumet, pyrafluprole, pyriprole, tralopyril, flupyrazofos, diofenolan, chlorobenzilate, flufenzine, benzomate, flufenerim, albendazole, oxibendazole, fenbendazole, metam-sodium, 1,3-dichloropropene, flometoquin, tetraniliprole, dicloromezotiaz, ethylene dibromide, acrylonitrile, bis(2-chloroethyl)ether, 1-bromo-2-chloroethane, 3-bromo-1-chloroprop-1-ene, bromocyclen, carbon disulfide, carbon tetrachloride (tetrachloromethane), nemadectin, cymiazole, calcium polysulfide, cytokinin, 2-(octylthio)ethanol, potassium oleate, sodium oleate, machine oil, tar oil, anabasine, morantel tartrate, insect flower (pyrethrum), rapeseed oil, soybean lecithin, starch, hydroxypropyl starch, fatty acid glyceride (decanoyloctanoylglycerol), propylene glycol fatty acid ester, diatomaceous earth (diatomite), afoxolaner, fluazaindolizine, cyhalodiamide, tioxazafen, fluhexafon, fluralaner, tetrachlorantraniliprole, sarolaner, lotilaner, tigolaner, cycloxaprid, fluensulfone, tripropyl isocyanurate (TPIC), D-D (1,3-dichloropropene), peroxocarbonate, MB-599 (verbutin), bis(2,3,3,3-tetrachloropropyl)ether, DCIP (bis(2-chloro-1-methylethyl)ether), ENT-8184 (N-(2-ethylhexyl)bicyclohept-5-ene-2,3-dicarboximide), Bayer 22408 (O,O-diethyl O-naphthalimidophosphorothioate), Bayer 32394 (tris(1-dodecyl-3-methyl-2-phenylbenzimidazolium)hexacyanoferrat e), benzpyrimoxan, acynonapyr, flupyrimin, tyclopyrazoflor, oxazosulfyl, spiropidion, isocycloseram, and dimpropyridaz.

Examples of the herbicide include acetyl-CoA carboxylase (ACCase) inhibitors such as butroxydim, clethodim, clodinafop, cycloxydim, cyhalofop-butyl, diclofop-methyl, fenoxaprop-P-ethyl, fluazifop-butyl, haloxyfop, metamifop, pinoxaden, profoxydim, propaquizafop, quizalofop, quizalofop-P-tefuryl, sethoxydim, tepraloxydim, and tralkoxydim;

acetolactate synthase (ALS) inhibitors such as amidosulfuron, azimusulfuron, bensulfuron-methyl, bispyribac-sodium, chlorimuron-ethyl, chlorsulfuron, cinosulfuron, cloransulam-methyl, cyclosulfamuron, diclosulam, ethametsulfuron-methyl, ethoxysulfuron, flazasulfuron, florasulam, flucarbazone, flucetosulfuron, flumetsulam, flupyrsulfuron-methyl-sodium, foramsulfuron, halosulfuron-methyl, imazamethabenz-methyl, imazamox, imazapic, imazapyr, imazaquin, imazethapyr, imazosulfuron, iodosulfuron-methyl-sodium, mesosulfuron-methyl, metazosulfuron, metosulam, metsulfuron-methyl, nicosulfuron, orthosulfamuron, oxasulfuron, penoxsulam, primisulfuron-methyl, propoxycarbazone, propyrisulfuron, prosulfuron, pyrazosulfuron, pyribenzoxim, pyriftalid, pyriminobac-methyl, pyrimisulfan, pyrithiobac, pyroxsulam, rimsulfuron, sulfometuron, sulfosulfuron, thiencarbazone-methyl, thifensulfuron-methyl, triafamone, triasulfuron, tribenuron-methyl, trifloxysulfuron, triflusulfuron-methyl, and tritosulfuron;

photosynthesis (photochemical system II) inhibitors such as ametryn, amicarbazone, atrazine, bentazone, bromacil, bromoxynil, chloridazon, chlorotoluron, cyanazine, desmedipham, dimethametryn, diuron (DCMU), fluometuron, hexadinone, ioxynil, isoproturon, lenacil, linuron, metamitron, methabenzthiazuron, metobromuron, metribuzin, phenmedipham, prometryn, propanil, pyridate, simazine, tebuthiuron, terbacil, terbuthylazine, and terbutryn;

photochemical system I electron conversion system-inhibiting herbicides such as diquat and paraquat;

protoporphyrinogen oxidase (PPO) inhibitors such as acifluorfen, bifonox, butafenacil, carfentrazone-ethyl, cinidon-ethyl, cyclopyranil, flumiclorac-pentyl, flumioxazin, fomesafen, lactofen, oxadiargyl, oxadiazon, oxyfluorfen, pentoxazone, pyraclonil, pyraflufen-ethyl, saflufenacil, sulfentrazone, tiafenacil, and trifludimoxadin;

inhibitors of carotenoid biosynthesis at a level of phytoene desaturase (PDS), such as beflubutamid, diflufenican, fluridone, flurochloridone, flurtamone, norflurazon, and picolinafen;

4-hydroxyphenylpyruvate dioxygenase (4-HPPD) inhibitors such as benzobicyclon, benzofenap, bicyclopyrone, fenquinotrione, isoxaflutole, lancotrione sodium, mesotrione, pyrasulfotole, pyrazolynate, pyrazoxyfen, sulcotrione, tefuryltrione, tembotrione, tolpyralate, and topramezone;

carotenoid biosynthesis (target site unknown) inhibitors such as aclonifen, amitrole, and fluometuron;

1-deoxy-D-xylulose-5-phosphate (DOXP) synthase inhibitors such as bixlozone and clomazone;

EPSP synthase inhibitors such as glyphosate;

glutamine synthetase inhibitors such as bilanafos and glufosinate; dihydropteroate (DHP) synthase inhibitors such as asulam;

microtubule polymerization inhibitors such as benfluralin, butamifos, butralin, chlorthal-dimethyl, ethalfluralin, oryzalin, pendimethalin, propyzamide, thiazopyr, and trifluralin;

mitosis/microtubule formation inhibitors such as carbetamide, IPC (chlorpropham), and propham;

VLCFA inhibitors such as acetochlor, alachlor, butachlor, cafenstrole, dimethachlor, dimethenamid, esprocarb, fenoxasulfone, fentrazamide, flufenacet, ipfencarbazone, mefenacet, metazachlor, metolachlor, pethoxamid, pretilachlor, propachlor, pyroxasulfone, and thenylchlor;

cell wall (cellulose) synthesis inhibitors such as dichlobenil, flupoxam, and isoxaben;

uncoupling (membrane disruption) herbicides such as DNBP (dinoseb), dinoterb, and DNOC;

lipid synthesis (non-ACCase) inhibitors such as benfuresate, butylate, EPTC, ethofumesate, and molinate;

indole acetic acid-like activity (synthetic auxin)-based herbicides such as 2,4-D, 2,4-DB, aminopyralid, benazolin-ethyl, clomeprop, clopyralid, dicamba, dichlorprop, florpyrauxifen-benzyl, fluroxypyr, halauxifen-methyl, MCPA, MCPB, mecoprop, picloram, and triclopyl;

auxin transport inhibitors such as diflufenzopyr; and

other herbicides such as aclonifen, anilofos, asulam, bromobutide, cinmethylin, cumyluron, cyclopyrimorate, daimuron, difenzoquat, dithiopyr, drechslera monoceras, endothal, ethoxyfen, etobenzanid, indanofan, napropamide, naptalam, orbencarb, oxaziclomefone, pelargonic acid, prodiamine, prosulfocarb, pyributicarb, quinclorac, quinmerac, quinoclamine, tetflupyrolimet, tetrapion, thiobencarb, and triallate.

Next, a method for controlling a plant disease and a method for reducing herbicide phytotoxicity each using the composition of the present invention will be described.

The method for controlling a plant disease according to the present invention includes applying the agrochemical composition of the present invention to cultivation soil or a plant.

The composition of the present invention is applied in such a manner that the composition is brought into contact with a plant body or a plant seed, or the composition is contained in cultivation soil related to cropping of the plant to thereby bring the composition into contact with a root or rhizome of a plant. That is, specific examples of the application method of the composition include a treatment of foliage spraying of a composition on a plant body; a treatment of a seedling box with a composition; a treatment of spraying a composition on the soil surface; a treatment of spraying a composition on the soil surface and then mixing the soil; a treatment of injecting a composition into the soil; a treatment of injecting a composition into the soil and then mixing the soil; a treatment of irrigating a composition into the soil; a treatment of irrigating a composition into the soil and then mixing the soil; a treatment of spraying a composition onto a plant seed; a treatment of smearing a plant seed with a composition; a treatment of dipping a plant seed in a composition; and a treatment of powder-coating a plant seed with a composition. However, any application method commonly used by those skilled in the art will be sufficiently effective.

These treatment methods for seeds may be appropriately combined or carried out a plurality of times as long as no adverse effect on the seeds is observed as a treatment method for the treated seeds of the composition of the present invention, subjected to film coating, pellet granulation, color pellet granulation and germination improvement treatment (priming treatment). More specifically, there is a method of dipping seeds in an aqueous solution in which the composition of the present invention is mixed, of spraying the composition on seeds, or of smearing seeds with the composition; a method of treating seeds with the composition of the present invention after mixing of talc or the like with the composition at the time of pelletizing/granulation; a method of treating seeds with the composition of the present invention after mixing of the composition in a coating liquid at the time of film coating; an absorption treatment method in which seeds are brought into contact with a carrier absorbed in an aqueous solution containing the composition of the present invention at the time of a priming treatment; or the like. However, any application method commonly used by those skilled in the art will be sufficiently effective.

The application rate and application concentration of the composition of the present invention vary depending on the target plant body, the target plant disease, the degree of occurrence of the disease, the dosage form of the compound, the application method, various environmental conditions, and the like. In a case where the composition of the present invention is sprayed or irrigated, the amount of hydroxyisoxazole as an active ingredient is appropriately 50 to 1,000,000 g per hectare and preferably 100 to 500,000 g per hectare. In addition, the amount used in the seed treatment is 0.001 to 50 g and preferably 0.01 to 10 g in terms of active ingredient per 1 kg of seeds. In a case where the composition of the present invention is sprayed on the foliage of a plant body, sprayed on the surface of soil, injected into soil, or irrigated into soil, the composition may be applied after diluting the composition with an appropriate carrier to an appropriate concentration. In a case where the composition of the present invention is brought into contact with plant seeds, the composition may be diluted to an appropriate concentration and then plant seeds may be dipped in or powder-coated, sprayed or smeared with the composition before use. The amount of the composition used in a case of powder coating, spraying, and smearing is appropriately usually about 0.05% to 50% and more preferably 0.1% to 30% of the dried plant seed weight, in terms of hydroxyisoxazole as an active ingredient. However, the amount of the composition used is not limited to such a range and may vary depending on the form of the composition and the type of plant seed to be treated.

In the present invention, a composition containing hydroxyisoxazole or a salt thereof as an active ingredient and a composition containing an auxiliary agent can also be used simultaneously or separately, in addition to using a composition containing hydroxyisoxazole or a salt thereof and an auxiliary agent. In a case where two compositions are used separately, either the composition containing hydroxyisoxazole or a salt thereof as an active ingredient, or the composition containing an auxiliary agent may be used first, and then the other composition may be used. Which one to use first is optional. That is, the present invention also relates to a method for enhancing the control effect of hydroxyisoxazole or a salt thereof against a plant disease, characterized in that (A) hydroxyisoxazole or a salt thereof and (B) an auxiliary agent consisting of (b1) at least one nonionic surfactant selected from the group consisting of a sugar ester type nonionic surfactant, an alkylamine type nonionic surfactant, an alkylphenol type nonionic surfactant, and an ether type nonionic surfactant, (b2) a carboxylic acid type anionic surfactant, (b3) a potassium salt, and (b4) at least one solvent selected from the group consisting of an amide-based solvent and a lactate-based solvent are applied to a plant body simultaneously or separately.

The composition of the present invention is a herbicide phytotoxicity reducing agent containing hydroxyisoxazole as an active ingredient, which makes it possible to avoid phytotoxicity caused by herbicides on plant bodies. For example, it is possible to reduce phytotoxicity such as growth disorder, growth suppression, growth depression, appearance of brown spots, tillering suppression, yellowing, leaf blight, firing, wilting, whitening, twisting, browning, and root growth inhibition. The composition of the present invention can be used in combination with an agrochemical composition or an agricultural material, or can be used alone before or after the use of an agricultural material to reduce the phytotoxicity.

Although the embodiments of the present invention have been described hereinbefore, those embodiments are only illustrative for the present invention and various configurations other than the foregoing embodiments can be adopted as long as the effects of the present invention are not impaired.

[Examples]

The details of the composition in the present invention will be described with reference to Examples and Test Examples. However, the present invention is not limited to these Examples and Test Examples.

In the following Examples and Test Examples, "part(s)" shall represent "part(s) by mass".

The ingredients used in the Examples are as follows.

(A) hydroxyisoxazole potassium salt

(B) auxiliary agent

(b1) nonionic surfactant

(b1-1: sugar ester type nonionic surfactant)

NEWKALGEN D-941: POE sorbitan monolaurate, manufactured by Takemoto Oil & Fat Co., Ltd.

NEWKALGEN D-945A: POE sorbitan monooleate, manufactured by Takemoto Oil & Fat Co., Ltd.

NEWKALGEN D-945T: POE sorbitan trioleate, manufactured by Takemoto Oil & Fat Co., Ltd.

NEWKALGEN D-945E: POE sorbitan fatty acid ester, manufactured by Takemoto Oil & Fat Co., Ltd.

RHEODOL TW-O320V: POE sorbitan trioleate, manufactured by Kao Corporation

ALKAMULS T80: POE sorbitan monooleate, manufactured by Solvay S.A.

(b1-2: alkylamine type nonionic surfactant)

NEWKALGEN D-3020: polyoxyalkylene polyalkylene polyamine (20% aqueous solution), manufactured by Takemoto Oil & Fat Co., Ltd.

DIANOL CDE: coconut oil fatty acid ethanol amide (1: 1 type), manufactured by DKS Co., Ltd.

ADSEE AB650: beef tallow amine ethoxylate/propoxylate, manufactured by Nouryon Chemicals Limited

Witcamine 4130A: alkoxylated aliphatic amine, manufactured by Nouryon Chemicals Limited

(b1-3: alkylphenol type nonionic surfactant)

NOIGEN EA-207D: POE styrenated phenyl ether, manufactured by DKS Co., Ltd.

SOLPOL T-10: POE (9) tristyrylphenyl ether, manufactured by Toho Chemical Industry Co., Ltd.

(b1-4: ether type nonionic surfactant)

NIKKOL BL-2: POE (2) lauryl ether, manufactured by Nikko Chemicals Co., Ltd.

NIKKOL BL-42: POE (4.2) lauryl ether, manufactured by Nikko Chemicals Co., Ltd.

TANEMUL PS16: POA tristyrylphenyl ether, manufactured by TANATEX Chemicals B.V.

NOIGEN TDS-70: POE tridecyl ether, manufactured by DKS Co., Ltd.

DKS NL-50: POE lauryl ether, manufactured by DKS Co., Ltd.

SOPROPHOR BSU: POE tristyrylphenyl ether (16EO), manufactured by Solvay S.A.

EMULGEN 108: POE lauryl ether, manufactured by Kao Corporation

EMANON 1112: PEG monolaurate, manufactured by Kao Corporation

NEWCOL 2320: POE alkyl ether (C12, C13), manufactured by Nippon Nyukazai Co., Ltd.

NEWCOL 2306Y: POA alkyl ether (C12, C13), manufactured by Nippon Nyukazai Co., Ltd.

NEWCOL NT-12: POA alkyl ether (C12, C14, secondary alcohol), manufactured by Nippon Nyukazai Co., Ltd.

NEWCOL 714: POE polycyclic phenyl ether, manufactured by Nippon Nyukazai Co., Ltd.

NOIGEN SD-80: POE isodecyl ether, manufactured by DKS Co., Ltd.

NOIGEN ET-165: POE alkyl ether, manufactured by DKS Co., Ltd.

DKS NL-70: POE lauryl ether, manufactured by DKS Co., Ltd.

PHOSPHANOL RA-600: POE alkyl ether phosphoric acid 80% + POE alkyl ether 20%, manufactured by Toho Chemical Industry Co., Ltd.

(b2) a carboxylic acid type anionic surfactant.

NEWKALGEN TG-90: special sodium polycarboxylate (40% aqueous solution), manufactured by Takemoto Oil & Fat Co., Ltd.

SOLPOL 7248S: polycarboxylate (40%), manufactured by Toho Chemical Industry Co., Ltd.

LOVISGEN F-200: polycarboxylic acid copolymer sodium salt (27%), manufactured by Senka Corporation

LOVISGEN GD-65R: polycarboxylate (acrylic anionic polymer) (45%), manufactured by Senka Corporation

(b3) potassium salt

Potassium sorbate, potassium pyrosulfite, potassium acetate, potassium dihydrogen phosphate, potassium benzoate, potassium tertiary phosphate, potassium hydrogen phthalate, potassium hexametaphosphate, tripotassium citrate, potassium nitrate, potassium carbonate, potassium lactate, potassium carbonate, and potassium acetate
(b4) solvent
(b4-1: amide-based solvent)
RHODIASOLV POLARCLEAN:
methyl-5-dimethylamino-2-methyl-5-oxopentanoate methyl, manufactured by Solvay S.A.
(b4-2: lactate-based solvent)
PURASOLV EHL: ethylhexyl lactate, manufactured by Corbion N.V.
PURASOLV ML: methyl lactate, manufactured by Corbion N.V.
PURASOLV EL: ethyl lactate, manufactured by Corbion N.V.
PURASOLV NPL: propyl lactate, manufactured by Corbion N.V.

[Comparative Example 1]

30 parts of hydroxyisoxazole potassium salt in terms of free acid and 70 parts of ion-exchanged water were uniformly mixed to obtain an agrochemical composition. The composition of the ingredients is shown in Table 1 and Table 2.

[Example 1]

30 parts of hydroxyisoxazole potassium salt in terms of free acid, 5 parts of NEWKALGEN D-941, and 65 parts of ion-exchanged water were uniformly mixed to obtain an agrochemical composition. The test results of Test Examples 1 and 2 are shown in Table-1.

[Examples 2 to 58]

Agrochemical compositions were obtained in the same manner as in Example 1, except that the compositions shown in Table 1 were used. The test results of Test Examples 1 and 2 are shown in Table-1.

[Comparative Examples 2 to 7]

Agrochemical compositions were obtained in the same manner as in Example 1, except that the compositions shown in Table 1 were used. The test results of Test Examples 1 and 2 are shown in Table 1, and the test results of Test Examples 1 and 3 are shown in Table 2.

[Example 59]

30 parts of hydroxyisoxazole potassium salt in terms of free acid, 2.5 parts of NEWKALGEN D-945E, 7.5 parts of LOVISGEN F-200, and 60 parts of ion-exchanged water were uniformly mixed to form an agrochemical composition. The test results of Test Examples 1 and 3 are shown in Table-2.

[Examples 60 to 112]

Agrochemical compositions were obtained in the same manner as in Example 59, except that the compositions shown in Table 2 were used. The test results of Test Examples 1 and 3 are shown in Table-2.

[Examples 113 to 166]

Agrochemical compositions were obtained in the same manner as in Examples 59 to 112, except that 20 parts of picarbutrazox were further mixed.

[Examples 167 to 220]

Agrochemical compositions were obtained in the same manner as in Examples 59 to 112, except that 20 parts of cyazofamid were further mixed.

[Examples 221 to 274]

Agrochemical compositions were obtained in the same manner as in Examples 59 to 112, except that 20 parts of amisulbrom were further mixed.

[Test Example 1] Rice seedling damping-off/Pythium graminicola A source of inoculum in which a rice seedling damping-off pathogen (Pythium graminicola) was cultured in a turf seed medium at 25°C for 10 days was inoculated on the surface layer of a pot (5 × 5 × 6 cm) containing bed soil. About 10 mL/pot (equivalent to 500 ml/box) of a chemical solution, which was obtained by diluting the test agrochemical formulation 500-fold and 1000-fold with water, was uniformly irrigated, and then soaked and germination-stimulated rice seeds (variety: Koshihikari) were sown as dried paddy in an amount of about 3 g (equivalent to 150 g/box). Rice seeds were germinated in a seedling raising device at 28°C for 3 days, and then subjected to a low temperature treatment at 5°C for 2 days to promote the onset of disease. After the low temperature treatment, seedlings were raised and managed in a glass greenhouse. Ten days after sowing, a grade of damage was investigated using a disease onset area in the pot as an index, and a preventive value was calculated from the grade of damage.

(Grade of damage)

0: There was no occurrence of disease
1: The disease onset area was 1% to 20%
2: The disease onset area was 21% to 40%
3: The disease onset area was 41% to 60%
4: The disease onset area was 61% to 80%
5: The disease onset area was 80% to 100%

(Preventive value)

$$\text{Preventive value} = 100\{1- (n/N)\}$$

N = grade of damage of untreated group, n = grade of damage of each group

Furthermore, a degree of improvement in the preventive value with respect to the formulation containing only hydroxyisoxazole (Comparative Example 1) was evaluated using the following standards as an index.

(Standards)

A: The preventive value was improved by 1 or more in any of test agrochemical formulations diluted 500-fold and 1000-fold as compared with the test agrochemical formulation of Comparative Example 1 having the same dilution ratio.
B: The preventive value was comparable in any of test agrochemical formulations diluted 500-fold and 1000-fold as compared with the test agrochemical formulation of Comparative Example 1 having the same dilution ratio.
C: The preventive value was inferior in any of test agrochemical formulations diluted 500-fold and 1000-fold as compared with the test agrochemical formulation of Comparative Example 1 having the same dilution ratio.

[Test Example 2] Sugar beet seedling damping-off/Aphanomyces cochlioides

120 pelletized sugar beet seeds (variety: Jamon) were placed in a glass jar, and then a chemical solution, which was obtained by diluting the test agrochemical formulation 3-fold with water, was spray-treated at a ratio of 2.3% to pellet seed weight (equivalent to 24 ga.i./U). Thereafter, the seeds treated with the chemicals were sown in a nursery box (32 × 24 cm) which was then allowed to stand in a glass greenhouse. Twenty-one days after sowing, the number of healthy seedlings and the number of dead seedlings were investigated to calculate a rate of dead seedlings, and the preventive value was calculated from the rate of dead seedlings.

(Rate of dead seedlings)

100 x (number of dead seedlings/number of healthy seedlings) (Preventive value)

$$Preventive\ value = 100\ \{1- (n/N)\}$$

N = rate of dead seedlings in untreated group, n = rate of dead seedlings in each group
Furthermore, a degree of improvement in the preventive value by the formulation of the present invention with respect to the formulation containing only hydroxyisoxazole (Comparative Example 1) was evaluated using the following standards as an index.

(Standards)

A: The preventive value was improved by 1 or more as compared with Comparative Example 1.
B: The preventive value was comparable as compared with Comparative Example 1
C: The preventive value was inferior as compared with Comparative Example 1

[Test Example 3] Rice seedling damping-off/Fusarium spp.
A rice seedling damping-off pathogen (Fusarium spp.) was cultured in an oat medium at 25°C for 21 days, and the culture was mixed with the test soil to prepare contaminated soil, and then a pot ($5 \times 5 \times 6$ cm) was filled with the thus-prepared contaminated soil as bed soil. About 10 mL/pot (equivalent to 500 ml/box) of a chemical solution, which was obtained by diluting the test agrochemical formulation 500-fold and 1000-fold with water, was uniformly irrigated, and then soaked and germination-stimulated rice seeds (variety: Koshihikari) were sown as dried paddy in an amount of about 3 g (equivalent to 150 g/box). Rice seeds were germinated in a seedling raising device at 28°C for 3 days, and then subjected to a low temperature treatment at 5°C for 3 days to promote the onset of disease. After the low temperature treatment, seedlings were raised and managed in a glass greenhouse. Twelve days after sowing, a grade of damage was investigated using a disease onset area in the pot as an index, and a preventive value was calculated from the grade of damage. Calculations and standards of the grade of damage and the preventive value were the same as in Test Example 1.
[Test Example 4] Rice seedling damping-off/Pythium gaminicola
The test was carried out in the same manner as in Test Example 1, except that the dilution ratio was set to 500-fold.

(Standards)

A: The preventive value was improved by 1 or more as compared with Comparative Example 1.
B: The preventive value was comparable as compared with Comparative Example 1
C: The preventive value was inferior as compared with Comparative Example 1

Table 1

| | Ingredient A (parts by mass) | Ingredient B | | | Ion-exchanged water | Test Example 1 Evaluation | Test Example 2 Evaluation |
|---|---|---|---|---|---|---|---|
| | | Type | Product name | (parts by mass) | | | |
| Comparative Example 1 | 30 | - | - | - | 70 | - | - |

(continued)

| | Ingredient A (parts by mass) | Ingredient B | | | Ion-exchanged water | Test Example 1 | Test Example 2 |
|---|---|---|---|---|---|---|---|
| | | Type | Product name | (parts by mass) | | Evaluation | Evaluation |
| Example 1 | 30 | b1-1 | NEWKALGEN D-941 | 5 | 65 | A | |
| Example 2 | 30 | b1-1 | NEWKALGEN D-945A | 5 | 65 | B | |
| Example 3 | 30 | b1-1 | NEWKALGEN D-945T | 5 | 65 | A | C |
| Example 4 | 30 | b1-1 | NEWKALGEN D-945E | 5 | 65 | A | A |
| Example 5 | 30 | b1-1 | RHEODOL TW-O320V | 5 | 65 | B | |
| Example 6 | 30 | b1-1 | ALKAMULS T80 | 5 | 65 | B | |
| Example 7 | 30 | b1-2 | NEWKALGEN D-3020 | 5 | 65 | B | |
| Example 8 | 30 | b1-2 | DIANOL CDE | 5 | 65 | B | |
| Example 9 | 30 | b1-2 | ADSEE AB650 | 5 | 65 | A | B |
| Example 10 | 30 | b1-2 | ADSEE AB650 | 10 | 60 | A | C |
| Example 11 | 30 | b1-2 | Witcamine 4130A | 5 | 65 | A | A |
| Example 12 | 30 | b1-3 | NOIGEN EA-207D | 5 | 65 | B | |
| Example 13 | 30 | b1-3 | SOLPOL T-10 | 5 | 65 | A | |
| Example 14 | 30 | b1-4 | NIKKOL BL-2 | 5 | 65 | B | |
| Example 15 | 30 | b1-4 | NIKKOL BL-42 | 5 | 65 | B | |
| Example 16 | 30 | b1-4 | TANEMUL PS16 | 5 | 65 | B | |
| Example 17 | 30 | b1-4 | NOIGEN TDS-70 | 5 | 65 | B | |
| Example 18 | 30 | b1-4 | DKS NL-50 | 5 | 65 | B | |
| Example 19 | 30 | b1-4 | SOPROPHOR BSU | 5 | 65 | B | |
| Example 20 | 30 | b1-4 | EMULGEN 108 | 5 | 65 | B | |
| Example 21 | 30 | b1-4 | EMANON 1112 | 5 | 65 | B | |
| Example 22 | 30 | b1-4 | NEWCOL 2320 | 5 | 65 | A | C |
| Example 23 | 30 | b1-4 | NEWCOL 2306Y | 5 | 65 | B | |
| Example 24 | 30 | b1-4 | NEWCOL NT-12 | 5 | 65 | B | |
| Example 25 | 30 | b1-4 | NEWCOL 714 | 5 | 65 | B | |
| Example 26 | 30 | b1-4 | NOIGEN SD-80 | 5 | 65 | B | |

(continued)

| | Ingredient A (parts by mass) | Ingredient B | | | Ion-exchanged water | Test Example 1 | Test Example 2 |
|---|---|---|---|---|---|---|---|
| | | Type | Product name | (parts by mass) | | Evaluation | Evaluation |
| Example 27 | 30 | b1-4 | NOIGEN ET-165 | 5 | 65 | B | |
| Example 28 | 30 | b1-4 | DKS NL-70 | 5 | 65 | B | B |
| Example 29 | 30 | b1-4 | PHOSPHANOL RA-600 | 5 | 65 | A | |
| Example 30 | 30 | b2 | NEWKALGEN TG-90 | 12.5 (*1) | 57.5 | A | B |
| Example 31 | 30 | b2 | SOLPOL 7248S | 12.5 (*1) | 57.5 | A | A |
| Example 32 | 30 | b2 | NEWKALGEN TG-90 | 12.5 (*1) | 57.5 | A | |
| Example 33 | 30 | b2 | LOVISGEN F-200 | 18.5 (*1) | 51.5 | A | |
| Example 34 | 30 | b2 | LOVISGEN GD-65R | 11.1 (*1) | 58.9 | A | A |
| b1-1: sugar ester type nonionic surfactant<br>b1-2: alkylamine type nonionic surfactant<br>b1-3: alkylphenol type nonionic surfactant<br>b1-4: ether type nonionic surfactant<br>b2: carboxylic acid type anionic surfactant<br>(*1) 5 parts by mass in terms of active ingredient | | | | | | | |

Table 1 (continued)

| | Ingredient A (parts by mass) | Ingredient B | | | Ion-exchanged water (parts by mass) | Test Example 1 | Test Example 2 |
|---|---|---|---|---|---|---|---|
| | | Type | Product name | (parts by mass) | | Evaluation | Evaluation |
| Example 35 | 30 | b3 | Potassium sorbitan | 5 | 65 | C | C |
| Example 36 | 30 | b3 | Potassium pyrosulfite | 5 | 65 | A | C |
| Example 37 | 30 | b3 | Potassium acetate | 5 | 65 | A | |
| Example 38 | 30 | b3 | Potassium dihydrogen phosphate | 5 | 65 | B | |
| Example 39 | 30 | b3 | Potassium benzoate | 5 | 65 | A | |
| Example 40 | 30 | b3 | Potassium tertiary phosphate | 5 | 65 | B | |
| Example 41 | 30 | b3 | Potassium hydrogen phthalate | 5 | 65 | A | |
| Example 42 | 30 | b3 | Potassium hexametaphosphate | 5 | 65 | B | |
| Example 43 | 30 | b3 | Tripotassium citrate | 5 | 65 | A | |
| Example 44 | 30 | b3 | Potassium nitrate | 5 | 65 | A | |
| Example 45 | 30 | b3 | Potassium carbonate | 5 | 65 | A | |
| Example 46 | 30 | b3 | Potassium lactate | 5 | 65 | B | |
| Example 47 | 30 | b4-1 | RHODIASOLV POLARCREAN | 30 | 40 | A | A |
| Example 48 | 30 | b4-1 | RHODIASOLV POLARCREAN | 20 | 50 | A | |
| Example 49 | 30 | b4-1 | RHODIASOLV POLARCREAN | 10 | 60 | A | |
| Example 50 | 30 | b4-1 | RHODIASOLV POLARCREAN | 10 | 60 | B | |
| Example 51 | 30 | b4-1 | RHODIASOLV POLARCREAN | 5 | 65 | A | A |
| Example 52 | 30 | b4-2 | PURASOLV EHL | 5 | 65 | B | |
| Example 53 | 30 | b4-2 | PURASOLV ML | 5 | 65 | B | A |
| Example 54 | 30 | b4-2 | PURASOLV EL | 5 | 65 | A | B |
| Example 55 | 30 | b4-2 | PURASOLV NPL | 5 | 65 | B | |
| Example 56 | 30 | b4-2 | PURASOLV ML | 10 | 60 | A | |
| Example 57 | 30 | b4-2 | PURASOLV EL | 10 | 60 | B | |

(continued)

| | Ingredient A (parts by mass) | Ingredient B | | | Ion-exchanged water (parts by mass) | Test Example 1 | Test Example 2 |
|---|---|---|---|---|---|---|---|
| | | Type | Product name | (parts by mass) | | Evaluation | Evaluation |
| Example 58 | 30 | b4-2 | PURASOLV NPL | 10 | 60 | B | |
| Comparative Example 2 | 30 | - | n-Octyltrimethylammonium bromide | 5 | 65 | C | |
| Comparative Example 3 | 30 | - | EMAL 10PT | 10 | 60 | B | |
| Comparative Example 4 | 30 | - | NEWCOL 291 PG | 5 | 65 | B | |
| Comparative Example 5 | 30 | - | 2-Chloro-1-(dimethylamino)propane hydrochloride | 5 | 65 | C | |
| Comparative Example 6 | 30 | - | SOLFIT | 5 | 65 | B | |
| Comparative Example 7 | 10 | - | 291PG | 14 | 76 | C | |
| b3: potassium salt b4-1: amide-based solvent b4-2: lactate-based solvent | | | | | | | |

Table 2

| | (parts by mass) | Comparative Example 1 | | | | | | | | |
|---|---|---|---|---|---|---|---|---|---|---|
| | | 1 | 2 | 3 | 4 | 5 | 6 | 7 | 8 | 9 |
| Ingredient A | Hydroxyisoxazole potassium salt | 30 | 30 | 30 | 30 | 30 | 30 | 30 | 30 | 30 |
| Ingredient B | n-Octyltrimethylammonium bromide | | 5 | | | | | | | |
| | EMAL 10PT | | | 10 | | | | 3 | | |
| | NEWCOL 291 PG | | | | 5 | | | | | |
| | 2-Chloro-1-(dimethylamino)propane hydrochloride | | | | | | 5 | | | |
| | SOLFIT | | | | | | | 5 | 40 | |
| | 291PG | | | | | | | 21 | 28 | 14 |
| Ion-exchanged water | | 70 | 65 | 60 | 65 | 65 | 65 | 46 | 12 | 56 |
| Test Example 4 (evaluation) | | - | C | B | B | C | B | C | C | C |
| Test Example 3 (evaluation) | | - | C | A | C | C | B | A | C | C |

Table 2 (continued)

| | | (parts by mass) | Example | | | | | | | | | | | | | | | | |
|---|---|---|---|---|---|---|---|---|---|---|---|---|---|---|---|---|---|---|---|
| | | | 59 | 60 | 61 | 62 | 63 | 64 | 65 | 66 | 67 | 68 | 69 | 70 | 71 | 72 | 73 | 74 | 75 |
| Ingredient A | | Hydroxyisoxazole potassium salt | 30 | 30 | 30 | 30 | 30 | 30 | 30 | 30 | 30 | 30 | 30 | 30 | 30 | 30 | 30 | 30 | 30 |
| Ingredient B | b1-1 | NEWKALGEN D-945E | 2.5 | 2.5 | 2.5 | | | | | | | | | | | | | | |
| | | NEWKALGEN D-941 | | | | 2.5 | 2.5 | 2.5 | | | | | | | | | | | |
| | b1-2 | Witcamine 4130A | | | | | | | 2.5 | 2.5 | 2.5 | 3 | 2.5 | | | | | | |
| | b1-3 | SOLPOL T-10 | | | | | | | | | | | | 2.5 | 2.5 | 2.5 | | | |
| | b1-4 | NEWCOL 2320 | | | | | | | | | | | | | | | 2.5 | 2.5 | 2.5 |
| | | SOLPOL 7248S | | | | 6.3 | | | | | | | | | | | 6.3 | | |
| | b2 | LOVISGEN GD-65R | | | | | | | 5 | | | | | | | | | | |
| | | LOVISGEN F-200 | 7.5 | | | | | | | | | | | | | | | | |
| | | NEWKALGEN TG-90 | | | | | | | | | | | | 6.3 | | | | | |
| | b3 | Potassium chloride | | | | | | | | 2.5 | | | | | | | | | |
| | | Potassium carbonate | | 2.5 | | | | | | | | | | | | | | | |
| | | Potassium nitrate | | | | | 2.5 | | | | | | | | | | 2.5 | | |
| | | Potassium benzoate | | | | | | | | | | | | | | 2.5 | | | |
| | b4-1 | POLARCLEAN | | | | | | | | | 2.5 | 3 | | | | | | | |
| | b4-2 | PURASOLV ML | | | 2.5 | | | | | | | | | | | | | | |
| | | PURASOLV BL | | | | | | | | | | | | | | 2.5 | | | |
| | | PURASOLV NPL | | | | | | | | | | 3 | 2.5 | | | | | | |
| | | PURASOLV EHL | | | | | | 2.5 | | | | | | | | | | | 2.5 |
| Ion-exchanged water | | | 60 | 65 | 65 | 61.2 | 65 | 65 | 62.5 | 65 | 65 | 61 | 65 | 61.2 | 65 | 65 | 61.2 | 65 | 65 |
| Test Example 4 (evaluation) | | | A | A | A | - | - | - | A | A | B | A | A | B | B | C | - | - | - |
| Test Example 3 (evaluation) | | | B | B | A | - | - | - | B | B | B | B | B | B | A | B | - | - | - |

b1-1: sugar ester type nonionic surfactant   b2: carboxylic acid type anionic surfactant
b1-2: alkylamine type nonionic surfactant   b3: potassium salt
b1-3: alkylphenol type nonionic surfactant   b4-1: amide-based solvent
b1-4: ether type nonionic surfactant   b4-2: lactate-based solvent

Table 2 (continued)

| (parts by mass) | | | Example | | | | | | | | | | | | | | | | | |
|---|---|---|---|---|---|---|---|---|---|---|---|---|---|---|---|---|---|---|---|---|
| | | | 76 | 77 | 78 | 79 | 80 | 81 | 82 | 83 | 84 | 85 | 86 | 87 | 88 | 89 | 90 | 91 | 92 | 93 | 94 |
| Ingredient A | | Hydroxyisoxazole potassium salt | 30 | 30 | 30 | 30 | 30 | 30 | 30 | 30 | 30 | 30 | 30 | 30 | 30 | 30 | 30 | 30 | 30 | 30 | 30 |
| Ingredient B | b1-1 | NEWKALGEN D-945E | 2 | 2 | | | | | | | | | | 2 | | | | | | | |
| | | NEWKALGEN D-941 | | | 2.5 | 2.5 | | | | | | | | | 2 | | | | | | |
| | b1-2 | Witcamine 4130A | | | | | 2 | 2 | 2 | | | | | | | 2 | 2 | | | | |
| | b1-3 | SOLPOL T-10 | | | | | | | | 2.5 | 2.5 | | | | | | | 2 | | | |
| | b1-4 | NEWCOL 2320 | | | | | | | | | | 2.5 | 2.5 | | | | | | 2 | | |
| | b2 | SOLPOL 7248S | | | 5 | 5 | | | | | | 5 | 5 | | 4 | | | | 4 | 6.3 | 6.3 |
| | | LOVISGEN GD-65R | | | | | 4 | 4 | 4 | | | | | | | 4 | 4 | | | | |
| | | LOVISGEN F-200 | 6 | 6 | | | | | | | | | | 4 | | | | | | | |
| | | NEWKALGEN TG-90 | | | | | | | | 5 | 5 | | | | | | | 4 | | | |
| | b3 | Potassium chloride | | | | 2 | | | | | | | | | | 2 | 2 | | | | |
| | | Potassium carbonate | 2 | | | | | | | | | | | 2 | | | | | | | |
| | | Potassium nitrate | | | 2.5 | | | | | | | 2.5 | | | 2 | | | | 2 | 2.5 | |
| | | Potassium benzoate | | | | | | | | 2.5 | | | | | | | | 2 | | | |
| | b4-1 | POLARCLEAN | | | | | | | 2 | | | | | | | 2 | | | | | |
| | b4-2 | PURASOLV ML | | 2 | | | | | | | | | | 2 | | | | | | | |
| | | PURASOLV BL | | | | | | | | | 2.5 | | | | | | | | 2 | | |
| | | PURASOLV NPL | | | | | | | 2 | | | | | | | | 2 | | | | |
| | | PURASOLV EHL | | | 2.5 | | | | | | | 2.5 | | | 2 | | | | 2 | | 2.5 |
| Ion-exchanged water | | | 60 | 60 | 60 | 60 | 62 | 62 | 62 | 60 | 60 | 60 | 60 | 60 | 60 | 60 | 60 | 60 | 60 | 61.2 | 61.2 |
| Test Example 4 (evaluation) | | | B | B | – | – | B | A | A | A | C | – | – | C | – | B | A | A | – | – | – |
| Test Example 3 (evaluation) | | | C | C | – | – | C | C | C | A | C | – | – | B | – | B | B | A | – | – | – |

b1-1: sugar ester type nonionic surfactant  b2: carboxylic acid type anionic surfactant
b1-2: alkylamine type nonionic surfactant  b3: potassium salt
b1-3: alkylphenol type nonionic surfactant  b4-1: amide-based solvent
b1-4: ether type nonionic surfactant  b4-2: lactate-based solvent

[Table 6]

Table 2 (continued)

| (parts by mass) | | | Example | | | | | | | | | | | | | | | | | |
|---|---|---|---|---|---|---|---|---|---|---|---|---|---|---|---|---|---|---|---|---|
| | | | 95 | 96 | 97 | 98 | 99 | 100 | 101 | 102 | 103 | 104 | 105 | 106 | 107 | 108 | 109 | 110 | 111 | 112 |
| Ingredient A | | Hydroxyisoxazole potassium salt | 30 | 30 | 30 | 30 | 30 | 30 | 30 | 30 | 30 | 30 | 30 | 30 | 30 | 30 | 30 | 30 | 30 | 30 |
| Ingredient B | b2 | LOVISGEN GD-65R | 5 | 5 | 5 | | | | | 4 | 4 | | | | | | | | | |
| | | LOVISGEN F-200 | | | | 7.5 | 7.5 | | | | | 6 | | | | | | | | |
| | | NEWKALGEN TG-90 | | | | | | 6.3 | 6.3 | | | | 5 | | | | | | | |
| | b3 | Potassium chloride | 2.5 | | | | | | | 2 | 2 | | | 2.5 | 2.5 | | | | | |
| | | Potassium carbonate | | | | 2.5 | | | | | | 2 | | | | 2.5 | | | | |
| | | Potassium nitrate | | | | | | | | | | | | | | | 2.5 | | | |
| | | Potassium benzoate | | | | | | 2.5 | | | | | 2.5 | | | | | 2.5 | | |
| | b4-1 | POLARCLEAN | | 2.5 | | | | | | 2 | | | | 2.5 | | | | | 5 | 4.3 |
| | b4-2 | PURASOLV ML | | | | 2.5 | | | | | | 2 | | | | 2.5 | | | | |
| | | PURASOLV BL | | | | | | | 2.5 | | | | 2.5 | | | | | 2.5 | | |
| | | PURASOLV NPL | | | 2.5 | | | | | | 2 | | | | 2.5 | | | | 5 | 1.3 |
| | | PURASOLV EHL | | | | | | | | | | | | | | | 2.5 | | | |
| Ion-exchanged water | | | 62.5 | 62.5 | 62.5 | 60 | 60 | 61.2 | 61.2 | 62 | 62 | 60 | 60 | 65 | 65 | 65 | 65 | 65 | 60 | 64.4 |
| Test Example 4 (evaluation) | | | A | A | B | A | A | B | A | A | A | A | A | A | B | B | – | A | C | A |
| Test Example 3 (evaluation) | | | A | B | B | B | A | B | B | B | B | A | B | B | B | C | – | C | A | B |

b2: carboxylic acid type anionic surfactant
b3: potassium salt
b4-1: amide-based solvent
b4-2: lactate-based solvent

As is clear from the results of Test Examples 1 to 4 shown in Table 1 and Table 2, the agrochemical compositions of Examples of the present invention showed a better fungicidal effect than the compositions of Comparative Examples, thus confirming that the fungicidal effect was enhanced.

[Industrial Applicability]

The agrochemical composition of the present invention is an agrochemical composition having improved efficacy in soil treatment and seed treatment, and is a formulation useful for agriculture.

This application claims priority based on Japanese Patent Application No. 2019-072794 filed on April 5, 2019, the disclosure of which is herein incorporated by reference in its entirety.

**Claims**

1. An agrochemical composition comprising:

    (A) hydroxyisoxazole or a salt thereof; and
    (B) at least one auxiliary agent selected from the following (b1) to (b4),
    (b1) at least one nonionic surfactant selected from the group consisting of a sugar ester type nonionic surfactant, an alkylamine type nonionic surfactant, an alkylphenol type nonionic surfactant, and an ether type nonionic surfactant,
    (b2) a carboxylic acid type anionic surfactant,
    (b3) a potassium salt (provided that, excluding a potassium salt of hydroxyisoxazole), and
    (b4) at least one solvent selected from the group consisting of an amide-based solvent and a lactate-based solvent.

2. The agrochemical composition according to claim 1, wherein (b1) the nonionic surfactant is at least one selected from a POE sorbitan fatty acid ester, an alkoxylated aliphatic amine, a POE alkyl phenyl ether, and a POE alkyl ether.

3. The agrochemical composition according to claim 1 or 2, wherein (b2) the carboxylic acid type anionic surfactant is at least one selected from a polycarboxylate and a sodium salt of a polycarboxylic acid copolymer.

4. The agrochemical composition according to any one of claims 1 to 3, wherein (b3) the potassium salt is at least one selected from potassium chloride, potassium carbonate, potassium nitrate, and potassium benzoate.

5. The agrochemical composition according to any one of claims 1 to 4, wherein (b4) the solvent is at least one selected from methyl-5-dimethylamino-2-methyl-5-oxopentanoate methyl, methyl lactate, ethyl lactate, and propyl lactate.

6. The agrochemical composition according to any one of claims 1 to 5, wherein (B) the auxiliary agent includes two or more selected from the (b1) to the (b4).

7. The agrochemical composition according to any one of claims 1 to 6, further comprising at least one compound selected from the group consisting of picarbutrazox, cyazofamid and amisulbrom, or a salt thereof.

8. A control agent for a plant disease, comprising the agrochemical composition according to any one of claims 1 to 6.

9. The control agent according to claim 8, wherein the plant disease is a disease caused by any of Aphanomyces spp., Pythium spp., Fusarium spp., Rhizoctonia spp., Screlotium spp., Cochiliobolus spp., Collletotrichum spp., Magnaporthe spp., Rosellinia spp., and Sclerotinia spp..

10. A control agent for a plant disease, comprising the agrochemical composition according to claim 7.

11. The control agent according to claim 10, wherein the plant disease is a disease caused by any of Aphanomyces spp., Pythium spp., Fusarium spp., Rhizoctonia spp., Screlotium spp., Cochiliobolus spp., Collletotrichum spp., Magnaporthe spp., Rosellinia spp., Sclerotinia spp., Rhizopus spp., Phytophthora spp., Albugo spp., Bremia spp., Peronospora spp., Pseudoperonospora spp., Plasmopara spp., Sclerospora spp., Plasmodiophora spp., and Spongospora spp..

12. A method for controlling a plant disease, comprising applying the agrochemical composition according to any one of claims 1 to 7 to cultivation soil or a plant.

13. The method for controlling a plant disease according to claim 12, wherein the application to a plant is by contact of the agrochemical composition according to any one of claims 1 to 7 with a plant body or a plant seed; or by inclusion of the agrochemical composition according to any one of claims 1 to 7 in cultivation soil related to cropping of the plant; or by contact of the agrochemical composition according to any one of claims 1 to 7 with a root or rhizome of the plant.

14. A method for enhancing a control effect, comprising

    applying (A) hydroxyisoxazole or a salt thereof and (B) at least one auxiliary agent selected from the following (b1) to (b4) to a plant body,

(b1) at least one nonionic surfactant selected from the group consisting of a sugar ester type nonionic surfactant, an alkylamine type nonionic surfactant, an alkylphenol type nonionic surfactant, and an ether type nonionic surfactant,

(b2) a carboxylic acid type anionic surfactant,

(b3) a potassium salt (provided that, excluding a potassium salt of hydroxyisoxazole), and

(b4) at least one solvent selected from the group consisting of an amide-based solvent and a lactate-based solvent.

## INTERNATIONAL SEARCH REPORT

International application No.

PCT/JP2020/014533

A.    CLASSIFICATION OF SUBJECT MATTER

A01P 3/00 (2006.01)i; A01N 43/80 (2006.01)i
FI: A01N43/80 101; A01P3/00

According to International Patent Classification (IPC) or to both national classification and IPC

B.    FIELDS SEARCHED

Minimum documentation searched (classification system followed by classification symbols)
A01P3/00; A01N43/80

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
CAplus/REGISTRY (STN)

C.    DOCUMENTS CONSIDERED TO BE RELEVANT

| Category* | Citation of document, with indication, where appropriate, of the relevant passages | Relevant to claim No. |
|---|---|---|
| X<br>Y | JP 2003-113007 A (ISHIHARA SANGYO KAISHA, LTD.) 18.04.2003 (2003-04-18) claims 1-7, paragraphs [0009], [0035]-[0036] | 1-14<br>7, 10-11 |
| X<br>Y | JP 2007-217317 A (ISHIHARA SANGYO KAISHA, LTD.) 30.08.2007 (2004-08-30) claims 1-7, paragraphs [0040], [0054], [0059], [0060] | 1-14<br>7, 10-11 |
| X<br>Y | WO 2017/188335 A1 (NISSAN CHEMICAL INDUSTRIES, LTD.) 02.11.2017 (2017-11-02) claims 1-18, paragraphs [0063], [0013]-[0115], [0123], [0126], table 21 | 1-6, 8, 9, 12-14<br>7, 10-11 |
| X<br>Y | JP 2012-512205 A (BAYER CROPSCIENCE AG) 31.05.2012 (2012-05-31) claims 1-16, paragraph [0120], tables 9, 10 | 1-6, 8, 9, 12-14<br>7, 10-11 |

☒   Further documents are listed in the continuation of Box C.        ☒   See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 01 June 2020 (01.06.2020) | 23 June 2020 (23.06.2020) |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2020/014533 |

C (Continuation).　DOCUMENTS CONSIDERED TO BE RELEVANT

| Category* | Citation of document, with indication, where appropriate, of the relevant passages | Relevant to claim No. |
|---|---|---|
| X | CN 106831137 A (SHANDONG CANDERAY AGRICULTURAL TECH CO., LTD.) 13.06.2017 (2017-06-13) claims 1- | 1-6, 8, 9, 12- 14 |
| Y | 10, paragraphs [0003], [0026]-[0113] | 7, 10-11 |
| X | CN 106748252 A (WANG, Lu) 31.05.2017 (2017-05-31) claims 1-7, paragraphs [0016]-[0028], [0051]- | 1-6, 8, 9, 12- 14 |
| Y | [0061] | 7, 10-11 |
| X | JP 2011-201849 A (SUMITOMO CHEMICAL CO., LTD.) 13.10.2011 (2011-10-13) claims 1-8, paragraphs | 1-5, 8, 9, 12- 14 |
| Y | [0014], [0019]-[0020], [0033] | 7, 10-11 |
| X | JP 2004-250378 A (BAYER CROPSCIENCE KK, SANKYO AGRO KK) 09.09.2004 (2004-09-09) claim 1, | 1-5, 8, 9, 12- 14 |
| Y | paragraph [0025] | 7, 10-11 |
| X | CN 101913952 A (ZHONGGANG TAIFU (BEIJING) HI-TECH CO., LTD.) 15.12.2010 (2010-12-15) claims 1-12, | 1-5, 8, 9, 12- 14 |
| Y | paragraphs [0042]-[0063] | 7, 10-11 |
| Y | WO 2016/068013 A1 (ISHIHARA SANGYO KAISHA, LTD.) 06.05.2016 (2016-05-06) claim 1 | 7, 10-11 |
| A | WO 2016/161037 A1 (DOW ACROSCIENCES LLC) 06.10.2016 (2016-10-06) entire text | 1-14 |
| A | JP 2016-056099 A (SUMITOMO CHEMICAL CO., LTD.) 21.04.2016 (2016-04-21) entire text | 1-14 |
| A | JP 2004-043325 A (SANKYO AGRO KK) 12.02.2004 (2004-02-12) entire text | 1-14 |

Form PCT/ISA/210 (continuation of second sheet) (January 2015)

**INTERNATIONAL SEARCH REPORT**
Information on patent family members

International application No.

PCT/JP2020/014533

| Patent Documents referred in the Report | Publication Date | Patent Family | Publication Date |
|---|---|---|---|
| JP 2003-113007 A | 18 Apr. 2003 | US 2004/0191289 A1 claims, paragraphs [0013], [0055]-[0058] EP 1419693 A1 CN 1536962 A RU 2004105963 A TW 1308056 B | |
| JP 2007-217317 A | 30 Aug. 2007 | (Family: none) | |
| WO 2017/188335 A1 | 02 Nov. 2017 | US 2019/0133122 A1 claims, table 6, paragraphs [0266]-[0272], table 21 AU 2017257833 A CA 3021279 A CN 109068648 A KR 10-2019-0003479 A MX 2018013152 A BR 112018071017 A | |
| JP 2012-512205 A | 31 May 2012 | US 2011/0251062 A1 claims, paragraphs [0323]-[0324], [0333]-[0334] WO 2010/069489 A1 AR 75670 A TW 201031329 A CN 102256489 A KR 10-2011-0098819 A MX 2011005573 A CN 103283733 A TW 201536180 A KR 10-2017-0007538 A CL 2011001206 A | |
| CN 106831137 A | 13 Jun. 2017 | (Family: none) | |
| CN 106748252 A | 31 May 2017 | (Family: none) | |
| JP 2011-201849 A | 13 Oct. 2011 | US 2013/0012552 A1 claims, paragraphs [0020], [0025]-[0056], [0108]-[0109] EP 2542072 A AU 2011221774 A CA 2790215 A AR 81803 A CN 102834003 A MX 2012009663 A KR 10-2013-0018663 A BR 112012021635 A | |

Form PCT/ISA/210 (patent family annex) (January 2015)

**INTERNATIONAL SEARCH REPORT**
Information on patent family members

International application No.

PCT/JP2020/014533

| Patent Documents referred in the Report | Publication Date | Patent Family | Publication Date |
|---|---|---|---|
| JP 2004-250378 A | 09 Sep. 2004 | WO 2004/073401 A2 claims, page 12, lines 5-9 AT 336898 T KR 10-2005-0101338 A CN 1750760 A HK 1086988 A TW 200500007 A | |
| CN 101913952 A | 15 Feb. 2010 | (Family: none) | |
| WO 2016/068013 A1 | 06 May 2016 | CN 107148216 A claim 1 TW 201620385 A | |
| WO 2016/161037 A1 | 06 Oct. 2016 | US 2018/0125073 A1 whole document TW 201639453 A AR 104132 A | |
| JP 2016-056099 A | 21 Apr. 2016 | (Family: none) | |
| JP 2004-043325 A | 12 Feb. 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004043325 A

- JP 2019072794 A

**Non-patent literature cited in the description**

- *Journal of Oleo Science,* 2002, vol. 2 (4), 205-210

- *Japanese Journal of Pesticide Science,* 1982, vol. 7, 203-210